# FASCICULE DE BREVET EUROPEEN

(11) **EP 3 433 415 B1**
(45) Date de publication et mention de la délivrance du brevet: **08.12.2021**
(21) Numéro de dépôt: 17712794.1
(22) Date de dépôt: 24.03.2017
(51) Int. Cl.: D06M 15/59, D06M 15/263, D06M 15/227, C08J 5/12, D07B 1/06, D02G 3/48, C08G 81/02, C09D 5/08

(54) **ELÉMENT COMPOSITE AUTO-ADHÉRENT COMPRENANT UN COPOLYMÈRE À BLOCS**
SELBSTKLEBENDES VERBUNDELEMENT MIT EINEM BLOCKCOPOLYMER
SELF-ADHESIVE COMPOSITE ELEMENT COMPRISING A BLOCK COPOLYMER

(30) Priorité: 24.03.2016 FR 1652588
(43) Date de publication de la demande: 30.01.2019
(73) Titulaire: Compagnie Générale des Etablissements Michelin, 63000 Clermont-Ferrand (FR)
(72) Inventeur: RIGO, Sébastien, 63040 Clermont-Ferrand Cedex 09 (FR); PINEAU, Quentin, 27000 Evreux (FR)
(74) Mandataire: Louret, Sylvain
(86) Numéro de dépôt international: PCT/EP2017/057116
(87) Numéro de publication internationale: WO 2017/162872

(56) Documents cités:
- EP-A1- 0 193 746
- WO-A1-2016/046463
- US-A1- 2012 000 541

## Description

La présente invention se rapporte à un élément composite comportant un ou plusieurs éléments filaires, le ou lesdits éléments filaires étant recouvert d'une gaine comprenant une composition comprenant un copolymère à blocs spécifique.

Le gainage d'éléments métalliques ou textiles par des matières thermoplastiques tels que par exemple polyamide ou polyester est connu depuis fort longtemps, notamment afin de protéger ces renforts contre diverses agressions externes tels que la corrosion ou l'abrasion, ou encore en vue de rigidifier structurellement, solidariser entre eux divers ensembles de fils ou assemblages de fils tels que des câbles, et ainsi augmenter notamment leur résistance au flambage.

Dans des domaines très divers, des pièces ou structures métalliques sont exposées à des agressions externes sur une très longue période, que ce soit des pièces métalliques exposées à l'air, à la surface de l'eau ou bien sous l'eau. Par exemple des câbles de suspension de pont sont exposés à de grandes différences de température.

Dans ces domaines spécifiques, les structures métalliques ont une durée de vie longue et doivent présenter une résistance à la corrosion efficace et durable.

Depuis de longues dates, il est recherché des moyens pour améliorer la résistance à la corrosion. Des voies différentes ont été exploitées pour résoudre ce problème technique. Des recherches ont été menées sur la structure des matériaux métalliques en eux-mêmes. Des traitements anti-corrosion, que le matériau a subi avant son installation ont également été développés, comme les traitements au chrome ou au phosphate. Une dernière approche consiste en l'application sur la pièce métallique d'un revêtement.

Par ailleurs, des éléments composites composés de fils et d'une gaine polymérique, ainsi que leur utilisation dans des articles en caoutchouc tels que des bandages pneumatiques, ont été décrits dans de nombreux documents brevets.

On connaît par exemple de l'état de la technique un renfort en acier ou en textile aramide gainé par une matière thermoplastique telle que polyester ou polyamide, en vue d'améliorer sa résistance à l'abrasion.

La demande de brevet FR 2 601 293 a décrit le gainage d'un câble métallique avec du polyamide pour l'utiliser comme tringle dans un bourrelet de bandage pneumatique, ce gainage permettant avantageusement d'adapter la forme de cette tringle à la structure et aux conditions de fonctionnement du bourrelet du bandage pneumatique qu'elle renforce.

Les documents brevet FR 2 576 247 ou US 4 754 794 ont également décrit des fils ou câbles métalliques doublement voire triplement gainés par deux, respectivement trois matières thermoplastiques différentes (e.g. polyamides) ayant des températures de fusion différentes, en vue d'une part de contrôler la distance entre ces fils ou câbles, d'autre part de supprimer les risques d'usure par frottement ou de corrosion, pour les utiliser comme tringle dans un bourrelet de bandage pneumatique.

Ces renforts ainsi gainés de matière polyester ou polyamide présentent, outre les avantages précités de résistance à la corrosion, de résistance à l'abrasion et de rigidité structurelle, celui non négligeable de pouvoir être ensuite collés à des matrices de caoutchouc diénique en utilisant de simples colles textiles dites "RFL" (résorcinol-formaldéhyde-latex) comportant au moins un élastomère diénique tel que du caoutchouc naturel, colles qui de manière connue confèrent une adhésion satisfaisante entre des fibres textiles tels que fibres en polyester ou polyamide et un caoutchouc diénique.

Ainsi, peuvent être utilisés avantageusement des renforts métalliques non revêtus de couches métalliques adhésives tels que laiton, ainsi que des matrices de caoutchouc environnantes dépourvues de sels métalliques tels que sels de cobalt, nécessaires de manière connue au maintien des performances adhésives au cours du temps mais augmentant significativement d'une part le coût des matrices de caoutchouc elles-mêmes, d'autre part leur sensibilité à l'oxydation et au vieillissement (voir par exemple demande WO 2005/113666).

Toutefois, les colles RFL ci-dessus ne sont pas dépourvues d'inconvénient ; elles comportent en particulier comme substance de base le formaldéhyde (ou formol) qu'il est souhaitable de supprimer à terme des compositions adhésives, en raison de l'évolution récente de la réglementation européenne sur ce type de produit.

Ainsi, les concepteurs d'articles en caoutchouc diénique, notamment les manufacturiers de bandages pneumatiques ont pour objectif aujourd'hui de trouver de nouveaux systèmes adhésifs ou de nouveaux renforts pour produits renforcés qui permettent de pallier tout ou partie des inconvénients précités.

Les demanderesses ont découvert que des copolymères à blocs de structure particulière résolvaient le problème technique posé, c'est-à-dire permettaient de préparer des éléments composites susceptibles d'adhérer directement au caoutchouc, et préférentiellement, des éléments composites dans lesquels le revêtement adhère à une pièce métallique de façon forte et durable et assure une résistance à la corrosion efficace et durable.

Lesdits copolymères à blocs sont des copolymères thermoplastiques et ne sont pas des caoutchoucs. En d'autres termes, le copolymère à bloc n'est pas réticulé et ne peut donc être un caoutchouc.

Les demanderesses ont pu remarquer que ces copolymères, qui conduisaient à cette double performance - bonne adhésion vis-à-vis des pièces métalliques et bonnes propriétés anti-corrosion - présentaient également une bonne capacité d'adhésion vis-à-vis d'autres pièces plastiques ou élastiques.

La présente invention a donc pour objet un élément composite comportant un ou plusieurs éléments filaires, le ou lesdits éléments filaires étant recouverts, individuellement ou collectivement, d'une
gaine comprenant une composition de gainage, ladite composition de gainage comprenant un ou plusieurs copolymères à blocs comprenant :
   - au moins un bloc polyamide,
   - au moins un bloc polyoléfine,
   - au moins un bloc alkylène, et
présentant une viscosité à l'état fondu allant de 300 à 20 000 Pa.s, en particulier de 300 à 15 000 Pa.s mesurée à 230°C par rhéologie oscillatoire.

En outre, le document EP 3 197 938, qui représente un état de la technique selon l'article 54(3) CBE, divulgue un ou plusieurs éléments filaires étant recouverts individuellement ou collectivement d'une gaine comprenant une composition de gainage qui comprend un ou plusieurs copolymères à blocs comprenant au moins un bloc polyamide, au moins un bloc polyoléfine et au moins un bloc alkylène.

Le document US 2012/0000541 A1 divulgue un procédé pour revêtir un pipeline d'une couche comprenant une composition de polyamide et un copolymère à bloc.

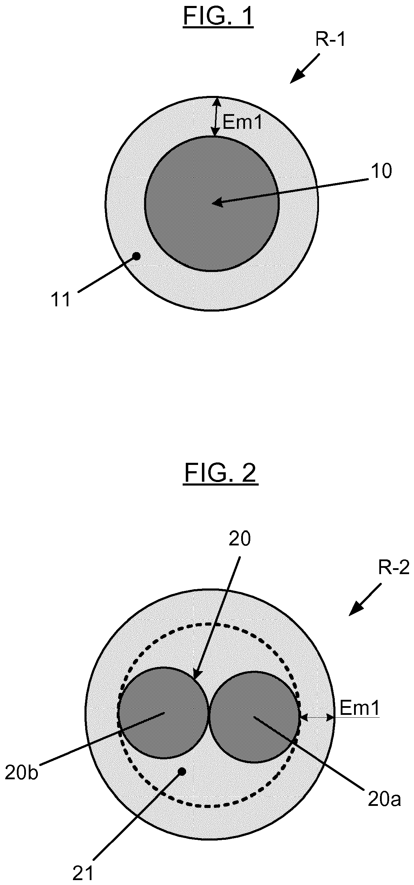

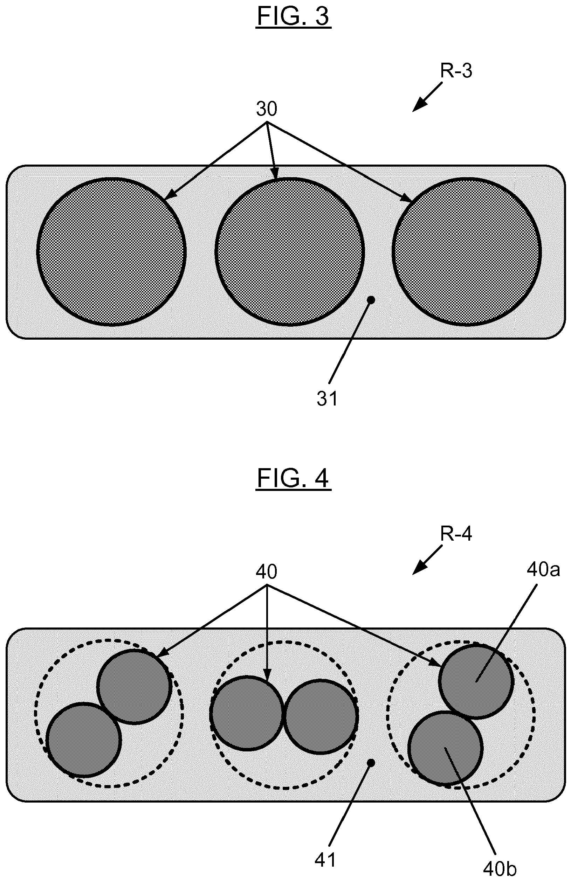

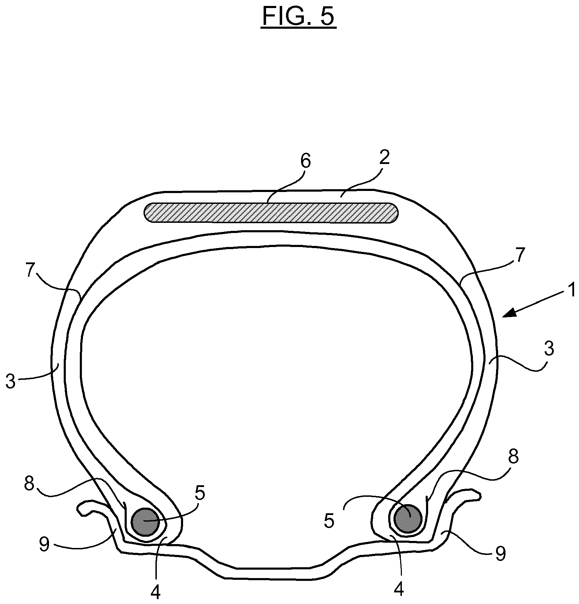

L'invention ainsi que ses avantages seront aisément compris à la lumière de la description et des exemples de réalisation qui suivent, ainsi que des figures relatives à ces exemples qui schématisent :
en coupe transversale, un exemple d'un élément composite selon l'invention (Fig. 1) ;
en coupe transversale, un autre exemple d'un élément composite conforme à l'invention (Fig. 2) ;
en coupe transversale, un autre exemple d'un élément composite conforme à l'invention (Fig. 3) ;
en coupe transversale, un autre exemple d'un élément composite conforme à l'invention (Fig. 4) ;
en coupe radiale, un bandage pneumatique à armature de carcasse radiale conforme à l'invention, incorporant un élément composite selon l'invention (Fig. 5).

Dans la présente description, sauf indication expresse différente, tous les pourcentages (%) indiqués sont des % en masse.

L'abréviation « pce » signifie parties en poids pour cent parties d'élastomère ou caoutchouc (du total des élastomères si plusieurs élastomères sont présents).

D'autre part, tout intervalle de valeurs désigné par l'expression "entre a et b" ou « compris entre a et b » représente le domaine de valeurs allant de a à b (c'est-à-dire bornes a et b inclues). De même, tout intervalle de valeurs désigné par l'expression "de a à b" signifie le domaine de valeurs allant de a jusqu'à b (c'est-à-dire incluant les bornes strictes a et b).

### Éléments filaires

Comme expliqué précédemment, l'élément composite selon l'invention comprend un ou plusieurs éléments filaires.

Dans la présente demande, on entend de manière générale par élément filaire tout élément longiligne de grande longueur relativement à sa section transversale, quelle que soit la forme de cette dernière, par exemple circulaire, oblongue, rectangulaire ou carrée, ou même plate, cet élément filaire pouvant être rectiligne comme non rectiligne, par exemple torsadé, ou ondulé. Lorsqu'il est de forme circulaire, son diamètre est de préférence inférieur à 5 mm, plus préférentiellement compris dans un domaine de 0,1 à 2 mm.

L'élément filaire peut prendre toute forme connue, il peut s'agir par exemple d'un monofilament élémentaire (ou fibrille) (par exemple et de préférence égal ou supérieur à 5 µm), d'un ruban élémentaire, d'un film, d'un assemblage unidirectionnel de monofilaments tel qu'une fibre multifilamentaire (constituée d'une pluralité de filaments élémentaires (ou monofilaments ou fibrilles), linéaires ou torsadés, de faible diamètre, typiquement inférieur à 30 µm)), un retors textile formé de plusieurs fibres retordues ensemble, une tresse formée de plusieurs fibres ou monofilaments tressés ensemble, un câble textile ou métallique formé de plusieurs fibres ou monofilaments câblés ou retordus ensemble.

Dans la présente demande, on entend de manière générale par élément composite, un ou plusieurs éléments filaires recouvert(s) d'une gaine.

Selon un mode de réalisation préférentiel, l'élément composite peut donc se présenter sous la forme d'un seul élément filaire, recouvert dans sa gaine, pour constituer un élément filaire composite unitaire gainé.

Selon un autre mode de réalisation préférentiel, l'élément composite peut aussi se présenter sous la forme de plusieurs éléments filaires. Dans ce cas, les éléments filaires (monofilaments, rubans, films, fibres, retors, tresses ou câbles) peuvent être agencés selon un assemblage multidirectionnel (2D, 3D) de façon à former un non tissé, un tricot, un tissé, un feutre ou une nappe. Selon un premier sous-mode de réalisation, chaque élément filaire est recouvert de sa gaine, puis les différents éléments filaires gainés sont agencés ensemble. Selon un second sous-mode de réalisation, les éléments filaires sont agencés ensemble, puis sont alors collectivement recouverts dans leur gaine.

Selon un mode de réalisation préférentiel, l'élément filaire est un élément filaire métallique comprenant au moins un monofilament métallique.

Par métallique, on entend par définition un élément filaire dans lequel chaque monofilament est constitué majoritairement (c'est-à-dire pour plus de 50% de sa masse) ou intégralement (pour 100% de sa masse) d'un matériau métallique. Chaque monofilament est préférentiellement en acier, plus préférentiellement en acier perlitique (ou ferrito-perlitique) au carbone désigné ci-après par "acier au carbone", ou encore en acier inoxydable (par définition, acier comportant au moins 11% de chrome et au moins 50% de fer). Lorsqu'un acier au carbone est utilisé, sa teneur en carbone (% en poids d'acier) est de préférence comprise entre 0,5% et 0,9%. On utilise de préférence un acier du type steel cord à résistance normale (dit "NT" pour " Normal Tensile ") ou à haute résistance (dit "HT" pour " High Tensile ") dont la résistance en traction (Rm) est de préférence supérieure à 2000 MPa, plus préférentiellement supérieure à 2500 MPa et inférieure à 3000 MPa (mesure effectuée en traction selon la norme ISO 6892 de 1984). L'acier peut être revêtu d'une couche adhésive telle que du laiton ou du zinc.

Selon un autre mode de réalisation préférentiel, l'élément filaire est un élément filaire textile, constitué d'une matière polymérique synthétique ou naturelle, voire d'une matière minérale. A titre d'exemples, on peut citer notamment les éléments filaires en alcool polyvinylique (PVA), polyamide aliphatique (e.g. polyamides 4-6, 6, 6-6, 11 ou 12), polyamide aromatique (ou "aramide"), polyamide-imide, polyimide, polyester (e.g. PET, PEN), polyester aromatique, polyéthylène, polypropylène, polycétone, cellulose, rayonne, viscose, polyphénylène benzobisoxazole (PBO), verre, carbone ou encore céramique.

Plus particulièrement, lorsque l'élément filaire est constitué d'un monofilament ou comprend un assemblage de monofilament, ces monofilaments peuvent être choisis parmi :
- les monofilaments de nature minérale,
- les monofilaments polymériques
- ou les mélanges des monofilaments citées ci-haut.

Comme monofilaments de nature minérale convenables pour l'invention, on peut citer les monofilaments de carbone, ce qui inclut les monofilaments de nanotubes ou nanotubes de carbone (NTC), les nanomonofilaments de carbone ou les graphènes ; les monofilaments de silice comme les monofilaments de verre, notamment de type E, R ou S2 ; les monofilaments de bore ; les monofilaments céramiques, notamment monofilaments de carbure de silicium, monofilaments de carbure de bore, monofilaments de carbonitrure de bore, monofilaments de nitrure de silicium, monofilaments de nitrure de bore, les monofilaments de basalte ; les monofilaments ou filaments à base de métaux et/ou de leurs alliages ; les monofilaments des oxydes métalliques, notamment d'alumine (A1203) ; les monofilaments métallisés comme les monofilaments de verre métallisés et les monofilaments de carbone métallisés ou les mélanges des monofilaments précités.

Plus particulièrement, ces monofilaments peuvent être choisis comme suit :
- les monofilaments de nature minérale peuvent être choisies parmi : les monofilaments de carbone, les monofilaments de nanotubes de carbone, monofilaments de verre, notamment de type E, R ou S2, monofilaments de bore, monofilaments céramiques, notamment monofilaments de carbure de silicium, monofilaments de carbure de bore, monofilaments de carbonitrure de bore, monofilaments de nitrure de silicium, monofilaments de nitrure de bore, monofilaments de basalte, monofilaments à base de métaux et/ou leurs alliages, monofilaments à base d'oxydes métalliques comme Al2O3, les monofilaments métallisés comme les monofilaments de verre métallisés et les fibres de carbone métallisés ou les mélanges des monofilaments précités, et
- les monofilaments de polymère ou polymériques sont choisis parmi :
   ∘ les monofilaments de polymères thermodurcissables et plus particulièrement choisis parmi : les polyesters insaturés, les résines époxy, les esters vinyliques, les résines phénoliques, les polyuréthanes, les cyanoacrylates et les polyimides, tels que les résines bis-maléimide, les aminoplastes résultant de la réaction d'une amine telle que la mélamine avec un aldéhyde tel que le glyoxal ou le formaldéhyde
   ∘ les monofilaments de polymères thermoplastiques et plus particulièrement choisis parmi : le polyéthylène téréphtalate (PET), le polybutylène téréphtalate (PBT), les polyoléfines haute densité telles que le polyéthylène (PET), le polypropylène (PP) et les copolymères PET/PP, PVOH (polyvinyl alcool)
   ∘ les monofilaments de polyamides répondant à l'une des formules : 6, 11, 12, 6.10, 6.12, 6.6, 4.6,
   ∘ les monofilaments d'aramides (comme le Kevlar^{®}) et polyamides aromatiques tels que ceux répondant à l'une des formules : PPD.T, MPD.I, PAA et PPA, avec PPD et MPD étant respectivement la p- et m-phénylène diamine, PAA étant les polyarylamides et PPA étant les polyphtalamides,
   ∘ les monofilaments de copolymères blocs de polyamide tel que le polyamide/polyéther, les monofilaments de polyaryléthers cétones (PAEK) telles que la polyétheréther cétone (PEEK), la polyéthercétone cétone (PEKK), la polyéthercétoneéthercétone cétone (PEKEKK).

Les monofilaments préférés sont choisis parmi les : monofilaments de carbone, y compris métallisées, monofilaments de verre, y compris métallisés de type E, R, S2, fibres d'aramides (comme le Kevlar^{®}) ou de polyamides aromatiques, les fibres de polyaryléthers cétones (PAEK), telle que la polyétheréther cétone (PEEK), monofilaments de la polyéthercétone cétone (PEKK), monofilaments de la polyéthercétoneéthercétone cétone (PEKEKK) ou leurs mélanges.

Les monofilaments plus particulièrement préférés sont choisis parmi : monofilaments de verre, monofilaments de carbone, de céramique et monofilaments d'aramides (comme le Kevlar^{®}) ou leurs mélanges. Ces monofilaments ont une section circulaire.

### Copolymère à blocs

Comme expliqué précédemment, le ou les éléments filaires sont recouverts d'une gaine.

Selon l'invention, la gaine comprend une composition de gainage, ladite composition de gainage comprenant un ou plusieurs copolymères à blocs.

Le copolymère à blocs utile selon la présente invention comporte :
- au moins un bloc polyamide,
- au moins un bloc polyoléfine,
- au moins un bloc alkylène, et
présentant une viscosité à l'état fondu allant de 300 à 20 000 Pa.s, en particulier de 300 à 15 000 Pa.s mesurée à 230°C par rhéologie oscillatoire.

La structure de ces blocs est décrite ci-dessous.

### Bloc polyamide

Les copolymères à blocs utile selon l'invention comportent dans leur structure au moins un bloc polyamide.

La nomenclature utilisée pour définir les polyamides est décrite dans la norme ISO 1874-1:1992 "Plastiques -- Matériaux polyamides (PA) pour moulage et extrusion -- Partie 1: Désignation", notamment en page 3 (tableaux 1 et 2) et est bien connue de l'homme du métier.

Le bloc polyamide peut avoir une structure homopolyamide ou copolyamide.

Par homopolyamide, au sens de la présente invention, on entend un polyamide, qui n'est constitué que de la répétition d'une unique unité.

Par copolyamide, au sens de la présente invention, on entend un polyamide, qui est constitué de la répétition d'au moins deux unités de structure chimique différente. Ce copolyamide peut présenter une structure aléatoire, alternée ou à blocs.

Le bloc polyamide peut comprendre une ou plusieurs unités de structure choisie parmi les amino-acides, les lactames et les unités (diamine). (diacide).

Lorsque le polyamide comporte un aminoacide dans sa structure, il peut être choisi parmi l'acide 9-aminononanoïque (A=9), l'acide 10-aminodécanoïque (A=10), l'acide 10-aminoundécanoïque (A=11), l'acide 12-aminododécanoïque (A=12) et l'acide 11-aminoundécanoïque (A=11) ainsi que ses dérivés, notamment l'acide N-heptyl-11-aminoundécanoïque, A désignant le nombre d'atomes de carbone dans le motif.

Lorsque le polyamide comporte un lactame, il peut être choisi parmi la pyrrolidinone, la 2-pipéridinone, le caprolactame, l'énantholactame, le caprylolactame, le pelargolactame, le décanolactame, l'undecanolactame, et le lauryllactame (A=12).

Lorsque le polyamide comporte est un motif répondant à la formule (diamine en Ca).(diacide en Cb) Ca et Cb désignant le nombre d'atomes de carbone respectivement dans la diamine et le diacide, le motif (diamine en Ca) est choisi parmi les diamines aliphatiques, linéaires ou ramifiés, les diamines cycloaliphatiques et les diamines alkylaromatiques.

Lorsque la diamine est aliphatique et linéaire, de formule H₂N-(CH₂)ₐ-NH₂, le monomère (diamine en Ca) est préférentiellement choisi parmi la butanediamine (a=4), la pentanediamine (a=5), l'hexanediamine (a=6), l'heptanediamine (a=7), l'octanediamine (a=8), la nonanediamine (a=9), la décanediamine (a=10), l'undécanediamine (a=11), la dodécanediamine (a=12), la tridécanediamine (a=13), la tetradécanediamine (a=14), l'hexadécanediamine (a=16), l'octadécanediamine (a=18), l'eicosanediamine (a=20), la docosanediamine (a=22) et les diamines obtenues à partir d'acides gras.

A titre de diamine aliphatique linéaire, on peut également citer l'octadécènediamine.

Lorsque la diamine est aliphatique et ramifiée, elle peut comporter un ou plusieurs substituants méthyle ou éthyle sur la chaîne principale. Par exemple, le monomère (diamine en Ca) peut avantageusement être choisi parmi la 2,2,4-trimethyl-1,6-hexanediamine, la 2,4,4-trimethyl-1,6-hexanediamine, le 1,3-diaminopentane, la 2-methyl-1,5-pentanediamine, la 2-methyl-1,8-octanediamine.

Lorsque le monomère (diamine en Ca) est cycloaliphatique, il est choisi parmi la bis(3,5-dialkyl-4-aminocyclohexyl)methane, la bis(3,5-dialkyl-4-aminocyclohexyl)ethane, la bis(3,5-dialkyl-4-aminocyclo-hexyl)propane, la bis(3,5-dialkyl-4-aminocyclo-hexyl)butane, la bis-(3-méthyl-4-aminocyclohexyl)-méthane (BMACM ou MACM), la p-bis(aminocyclohexyl)-methane (PACM) et l'isopropylidenedi(cyclohexylamine) (PACP), l'isophoronediamine (a=10), la pipérazine (a=4), l'amino-éthylpipérazine. Il peut également comporter les squelettes carbonés suivants : norbornyl méthane, cyclohexylméthane, dicyclohexylpropane, di(méthylcyclohexyl), di(methylcyclohexyl) propane. Une liste non-exhaustive de ces diamines cycloaliphatiques est donnée dans la publication "Cycloaliphatic Amines" (Encyclopaedia of Chemical Technology, Kirk-Othmer, 4th Edition (1992), pp. 386-405).

Lorsque le monomère (diamine en Ca) est alkylaromatique, il est choisi parmi la 1,3-xylylène diamine et la 1,4-xylylène diamine.

Le motif (diacide en Cb) est choisi parmi les diacides aliphatiques, linéaires ou ramifiés, les diacides cycloaliphatiques et les diacides aromatiques.

Lorsque le monomère (diacide en Cb) est aliphatique et linéaire, il est choisi parmi l'acide succinique (b=4), l'acide pentanedioïque (b=5), l'acide adipique (b=6), l'acide heptanedioïque (b=7), l'acide octanedioïque (b=8), l'acide azélaïque (b=9), l'acide sébacique (b=10), l'acide undécanedioïque (b=11), l'acide dodécanedioïque (b=12), l'acide brassylique (b=13), l'acide tetradécanedioïque (b=14), l'acide hexadécanedioïque (b=16), l'acide octadécanedioïque (b=18), l'acide octadécènedioïque (b=18), l'acide eicosanedioïque (b=20), l'acide docosanedioïque (b=22) et les dimères d'acides gras contenant 36 carbones.

Les dimères d'acides gras mentionnés ci-dessus sont des acides gras dimérisés obtenus par oligomérisation ou polymérisation d'acides gras monobasiques insaturés à longue chaîne hydrocarbonée (tels que l'acide linoléïque et l'acide oléïque), comme décrit notamment dans le document EP 0 471 566.

Lorsque le diacide est cycloaliphatique, il peut comporter les squelettes carbonés suivants : norbornyl méthane, cyclohexylméthane, dicyclohexylméthane, dicyclohexylpropane, di(méthylcyclohexyl), di(methylcyclohexyl)propane.

Lorsque le diacide est aromatique, il est choisi parmi l'acide téréphtalique (noté T), isophtalique (noté I) et les diacides naphtaléniques.

De préférence, le bloc polyamide est aliphatique.

Plus particulièrement, le bloc polyamide comprend au moins un motif choisi parmi PA 6, PA 11, PA12, PA 6.10, PA 6.6, PA 6.12, PA 10.10, PA 10.12.

Encore plus particulièrement, le bloc polyamide comprend au moins un motif possédant un nombre d'atomes de carbone sur atome d'azote supérieur ou égal à 8, et plus particulièrement comprend au moins un motif choisi parmi PA 11, PA12, PA 6.10, PA 6.12, PA 10.10, PA 10.12.

De préférence, le bloc polyamide est choisi parmi les blocs homopolyamide : PA 11, PA12, PA 6.10, PA 6.12, PA 10.10, PA 10.12.

De préférence, le ou les blocs polyamide présentent chacun une masse moléculaire en nombre mesurée par potentiométrie comprise entre 4 000 et 20 000.

De préférence, le copolymère à blocs utile selon l'invention comporte une teneur en bloc polyamide comprise entre 2 et 98%, de préférence entre 30 et 95%, de manière plus préférée entre 50 et 94% en poids par rapport au poids total du copolymère à blocs..

### Terminaisons de chaîne

Le ou les blocs polyamides peuvent se terminer par des fonctions amine ou acide, ou peuvent être fonctionnalisés de manière à se terminer par des fonctions isocyanate et anhydride, et de préférence se terminent par des fonctions amine.

### Bloc polyoléfine

Les copolymères à blocs utile selon l'invention comportent dans leur structure au moins un bloc polyoléfine.

Par bloc polyoléfine, doit être compris selon l'invention tout homopolymère ou copolymère issu au moins en partie de monomères diènes (monomères porteurs de deux doubles liaisons carbone-carbone, conjuguées ou non). Le bloc polyoléfine comporte des insaturations de type double liaison carbone-carbone. Le bloc polyoléfine insaturée peut appartenir à toute catégorie de polymères diéniques issus au moins en partie de monomères diènes, conjugués ou non. Il s'agit de tout type de bloc polyoléfine au sens connu de l'homme de l'art, à la condition que ce bloc polyoléfine soit insaturé.

Le bloc polyoléfine insaturé comporte des insaturations le long de la chaîne ou bien pendantes à la chaine. Le taux massique des unités monomériques porteuses de ces insaturations varie dans un domaine large qui permet d'englober les différentes catégories de blocs polyoléfines. Ainsi, les blocs polyoléfines appropriés peuvent être faiblement insaturés avec un taux massique d'unités monomériques insaturées d'au moins 1% par rapport à la masse totale du bloc polyoléfine. Selon des variantes ce taux peut alors être d'au moins 5% massique, voire d'au moins 10% massique. Les blocs polyoléfines peuvent également être fortement insaturés, avec un taux massique d'unités monomériques insaturées supérieur à 20% et pouvant atteindre 100% par rapport à la masse totale du bloc polyoléfine. Selon certaines variantes, ce taux peut alors être d'au moins 40% et voire d'au moins 50%.

On entend plus particulièrement par bloc polyoléfine susceptible d'être utilisé dans l'invention, un bloc polyoléfine correspondant à l'une des catégories suivantes:
(a) tout homopolymère obtenu par polymérisation d'un monomère diène conjugué ayant de 4 à 12 atomes de carbone;
(b) tout copolymère obtenu par copolymérisation d'un ou plusieurs diènes conjugués ayant de 4 à 12 atomes de carbone, entre eux ou avec un ou plusieurs monomères éthyléniquement insaturés;
(c) tout homopolymère obtenu par polymérisation d'un monomère diène non conjugué ayant de 5 à 12 atomes de carbone;
(d) tout copolymère obtenu par copolymérisation d'un ou plusieurs des diènes non conjugués ayant de 5 à 12 atomes de carbone, entre eux ou avec un ou plusieurs monomères éthyléniquement insaturés;
(e) un copolymère ternaire obtenu par copolymérisation d'éthylène, d'une α-oléfine ayant 3 à 6 atomes de carbone avec un monomère diène non conjugué ayant de 5 à 12 atomes de carbone, comme par exemple les élastomères obtenus à partir d'éthylène, de propylène avec un monomère diène non conjugué tels que décrits en particulier dans les documents WO 2004/035639A1 et US 2005/0239639A1;
(f) un copolymère d'isobutène et d'isoprène (caoutchouc butyle), ainsi que les versions halogénées, en particulier chlorées ou bromées, de ce type de copolymère;
(g) le caoutchouc naturel;
(h) un copolymère oléfinique insaturé dont la chaine comporte au moins des unités monomériques oléfiniques, c'est à dire des unités issues de l'insertion d'au moins une mono-oléfine, et des unités diéniques issues d'au moins un diène conjugué ou non.
(i) un mélange de plusieurs des élastomères définis en (a) à (h) entre eux.

A titre de monomère diène conjugué approprié pour la synthèse des blocs polyoléfines (a), (b) et (h), on peut citer le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de monomère diène non conjugué approprié pour la synthèse des blocs polyoléfines (c), (d) et (e), on peut citer le pentadiène-1,4, l'hexadiène-1,4, l'éthylidène norbornène, le dicyclopentadiène;

Les copolymères (b) ou (d) peuvent contenir entre 99% et 1% massique d'unités diéniques et entre 1% et 99% massique d'unités vinylaromatiques, nitriles vinyliques et/ou esters acryliques.

A titre de monomère mono-oléfine approprié pour la synthèse des blocs polyoléfines (h), on peut citer l'éthylène, une α-oléfine ayant 3 à 6 atomes de carbone, par exemple le propylène. Préférentiellement, le monomère mono-oléfine est l'éthylène.

Selon certaines variantes, le copolymère oléfinique (h) susceptible d'être utilisé dans le copolymère à bloc utile selon l'invention, est un copolymère dont la chaine comporte des unités monomériques oléfiniques, c'est à dire des unités issues de l'insertion d'au moins une mono-oléfine, et des unités diéniques issues d'au moins un diène conjugué. Selon d'autres variantes, les unités ne sont pas intégralement des unités issues de monomères diéniques et de monomères mono-oléfiniques. Selon ces variantes, d'autres unités issues par exemple d'un monomère éthyléniquement insaturé tel que décrit plus haut, sont présentes dans la chaine carbonée.

Parmi les blocs polyoléfines issus d'au moins un monomère diène conjugué, on peut citer comme exemples non exclusifs, le polybutadiène, le polyisoprène, le poly chloroprène, le polyisobutylène, les copolymères à blocs du butadiène et de l'isoprène avec le styrène comme le poly styrène-b-butadiène (SB) , le poly styrène-b-butadiène-b-styrène (SBS) , le poly styrène-b-isoprène-b-styrène (SIS) , les poly styrène-b- (isoprène-stat-butadiène) -b-styrène ou poly styrène-b-isoprène-b-butadiène-b-styrène (SIBS) , le SBS hydrogène (SEBS) , le poly styrène-b-butadiène-b-méthyl méthacrylate (SBM) , les copolymères statistiques du butadiène avec le styrène (SBR) et l'acrylonitrile (NBR), les copolymères statistiques de l'isoprène avec le styrène (SIR), les copolymères statistiques de l'isoprène et du butadiène avec le styrène (SBIR), les caoutchoucs butyle ou halogénés, les terpolymères d'éthylène-propylène-diène (EPDM), les copolymères d'éthylène-diène, ainsi que leurs mélanges.

Parmi ceux-ci, le ou les blocs polyoléfines sont tout particulièrement choisis dans le groupe des blocs polyoléfines constitué par les polybutadiènes (en abrégé "BR"), les polyisoprènes (IR) de synthèse, le caoutchouc naturel (NR), les copolymères de butadiène, les copolymères d'isoprène, les copolymères d'éthylène-diène et les mélanges de ces polymères.

De préférence, le bloc polyoléfine est du polybutadiène. Le polybutadiène peut comporter des séquences 1,4 cis, 1,4 trans ou 1,2 ou un mélange de celles-ci. De préférence, le polybutadiène comporte majoritairement (c'est-à-dire pour plus de 50 % en nombre de séquences 1,4 et 1,2) des séquences en 1,2.

Le copolymère à blocs comprend généralement une teneur en bloc polyoléfine comprise entre 2 et 98%, de préférence entre 5 et 70, de manière plus préférée entre 6 et 50%, préférentiellement entre 8 et 30, et de manière encore plus préférée entre 9 et 25 % en poids par rapport au poids total du copolymère à blocs.

### Terminaisons de chaîne

Le ou les blocs polypolyoléfine peuvent être fonctionnalisés de manière à se terminer par des fonctions choisies parmi les amine, acide, alcool, isocyanate et anhydride.

De manière encore préférée, le bloc polyoléfine est un bloc polybutadiène, terminé par des fonctions alcools.

Le produit de dénomination commerciale Krasol^{®} ou Poly Bd^{®} commercialisé par la société Cray Valley peut être utilisé.

### Propriétés physico-chimiques du bloc polyoléfine

Le bloc polyoléfine peut présenter une viscosité inférieure à 60 000 cps, de préférence inférieure à 40 000 cps, et de préférence inférieure à 20 000 cps et de façon encore préférentielle entre 1 000 et 20 000 cps, la viscosité étant mesurée à 25°C avec un appareil de Brookfield et selon la méthode Brookfield.

Avantageusement, le bloc polyoléfine a une masse moléculaire en nombre comprise entre 1 000 et 10 000, en particulier entre 1 000 et 4 000.

### Liaisons intermédiaires entre les blocs

Le ou les blocs polyamides et polyoléfines peuvent se terminer par des fonctions choisies parmi les amine, acide, isocyanate, alcool et anhydride. Le ou les blocs polyoléfines et polyamides peuvent être modifiés de manière à se terminer par ces fonctions.

Par conséquent, les liaisons entre les blocs peuvent être des fonctions ester, amide, urée et/ou uréthane.

### Bloc alkylène

Les copolymères à blocs utile selon l'invention comportent dans leur structure au moins un bloc alkylène.

Par bloc alkylène, on entend au sens de la présente invention une chaîne aliphatique, linéaire, saturée.

Le ou les blocs alkylènes sont reliés aux autres blocs polymères du copolymère selon l'invention par l'intermédiaire de fonctions, telles que celles choisies parmi les amine, acide, alcool, isocyanate et anhydride.

De préférence, le bloc alkylène est un diacide en C₂-C₃₆, plus préférentiellement en C₈-C₃₆, en particulier de C₁₀-C₃₆.

De manière plus préférée, le copolymère à blocs utile selon l'invention comporte au moins un bloc alkylène terminé par des fonctions acide.

De manière encore plus préférée, le copolymère à blocs utile selon l'invention comporte au moins un bloc alkylène comportant entre 2 et 36 atomes de carbone, de préférence entre 8 et 36 atomes de carbones, en particulier entre 10 et 36 atomes de carbones.

Plus particulièrement, le bloc alkylène est un diacide gras.

Plus particulièrement, le bloc alkylène est un dimère d'acide gras ou encore un acide gras dimérisé, de préférence un diacide en C₈-C₃₆.

De préférence, le bloc alkylène présente une masse molaire inférieure à 1000 g/mol, de préférence inférieure à 800 g/mol, de préférence encore inférieure à 600 g/mol.

De préférence, le copolymère à blocs utile selon l'invention se caractérise par un agencement particulier : le bloc alkylène se trouve entre un bloc polyamide et un bloc polyoléfine.

Par conséquent, le bloc alkylène joue le rôle de lien ou linker en langue anglaise entre les blocs polymères polyamide et polyoléfine.

Le produit de dénomination commerciale Pripol^{®} commercialisé par la société Croda peut être utilisé.

Le produit de dénomination commerciale Empol^{®} commercialisé par la société Cognis peut être utilisé.

Le produit de dénomination commerciale Unydime^{®} commercialisé par la société Arizona Chemical peut être utilisé.

Le produit de dénomination commerciale Radiacid^{®} commercialisé par la société Oleon peut être utilisé.

### Agencement du copolymère

Selon un premier mode de réalisation, le copolymère à blocs utile selon l'invention est de formule suivante :

PA-(R-Pol)n-R-Pol-R-PA

avec n compris entre 0 et 100, en particulier de 0 à 10, de préférence 0 ou 1,
PA désignant le bloc polyamide,
R désignant le bloc alkylène,
Pol désignant le bloc polyoléfine.

Selon un second mode de réalisation, le copolymère à blocs utile selon l'invention est de formule suivante :

PA-(R-Pol-PA)n-R-Pol-R-PA

avec n compris entre 0 et 100, en particulier de 0 à 10, de préférence 0 ou 1.
PA, R et Pol étant tels que définis ci-dessus.

Selon un troisième mode de réalisation, le copolymère à blocs utile selon l'invention est de formule suivante :

PA-(R-Pol-R-PA)n-R-Pol-R-PA

avec n compris entre 0 et 100, en particulier de 0 à 10, de préférence 0 ou 1,
PA, R et Pol étant tels que définis ci-dessus.

### Teneur des blocs

De préférence, le copolymère à blocs utile selon l'invention comporte une teneur en bloc alkylène comprise entre 0,1 et 25%, de préférence entre 1 et 15% en poids par rapport au poids total du copolymère à blocs.

Avantageusement, le copolymère à blocs utile selon l'invention comporte une teneur en bloc alkylène comprise entre 0,1 et 25%, une teneur en bloc polyamide comprise entre 2 et 98%, une teneur en bloc polyoléfine comprise entre 2 et 98%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 2 et 98%, une teneur en bloc polyoléfine comprise entre 5 et 70%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 2 et 98%, une teneur en bloc polyoléfine comprise entre 6 et 50%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 2 et 98%, une teneur en bloc polyoléfine comprise entre 8 et 30%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 2 et 98%, une teneur en bloc polyoléfine comprise entre 10 et 25%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 30 et 95%, une teneur en bloc polyoléfine comprise entre 2 et 98%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 30 et 95%, une teneur en bloc polyoléfine comprise entre 5 et 70%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 30 et 95%, une teneur en bloc polyoléfine comprise entre 6 et 50%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 30 et 95%, une teneur en bloc polyoléfine comprise entre 8 et 30%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 30 et 95%, une teneur en bloc polyoléfine comprise entre 10 et 25%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 50 et 94%, une teneur en bloc polyoléfine comprise entre 2 et 98%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 50 et 94%, une teneur en bloc polyoléfine comprise entre 5 et 70%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 50 et 94%, une teneur en bloc polyoléfine comprise entre 6 et 50%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 50 et 94%, une teneur en bloc polyoléfine comprise entre 8 et 30%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 50 et 94%, une teneur en bloc polyoléfine comprise entre 10 et 25%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 70 et 92%, une teneur en bloc polyoléfine comprise entre 2 et 98%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 70 et 92%, une teneur en bloc polyoléfine comprise entre 5 et 70%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 70 et 92%, une teneur en bloc polyoléfine comprise entre 6 et 50%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 70 et 92%, une teneur en bloc polyoléfine comprise entre 8 et 30%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 70 et 92%, une teneur en bloc polyoléfine comprise entre 10 et 25%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 75 et 90%, une teneur en bloc polyoléfine comprise entre 2 et 98%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 75 et 90%, une teneur en bloc polyoléfine comprise entre 5 et 70%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 75 et 90%, une teneur en bloc polyoléfine comprise entre 6 et 50%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 75 et 90%, une teneur en bloc polyoléfine comprise entre 8 et 30%, en poids par rapport au poids total du copolymère à blocs, la somme étant égale à 100%.

Avantageusement, le copolymère à blocs utile selon l'invention comporte une teneur en bloc alkylène comprise entre 0,1 et 25%, une teneur en bloc polyamide comprise entre 75 et 90%, une teneur en bloc polyoléfine comprise entre 10 et 25%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 2 et 98%, une teneur en bloc polyoléfine comprise entre 2 et 98%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 2 et 98%, une teneur en bloc polyoléfine comprise entre 5 et 70%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 2 et 98%, une teneur en bloc polyoléfine comprise entre 6 et 50%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 2 et 98%, une teneur en bloc polyoléfine comprise entre 8 et 30%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 2 et 98%, une teneur en bloc polyoléfine comprise entre 10 et 25%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 30 et 95%, une teneur en bloc polyoléfine comprise entre 2 et 98%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 30 et 95%, une teneur en bloc polyoléfine comprise entre 5 et 70%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 30 et 95%, une teneur en bloc polyoléfine comprise entre 6 et 50%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 30 et 95%, une teneur en bloc polyoléfine comprise entre 8 et 30%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 30 et 95%, une teneur en bloc polyoléfine comprise entre 10 et 25%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 50 et 94%, une teneur en bloc polyoléfine comprise entre 2 et 98%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 50 et 94%, une teneur en bloc polyoléfine comprise entre 5 et 70%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 50 et 94%, une teneur en bloc polyoléfine comprise entre 6 et 50%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 50 et 94%, une teneur en bloc polyoléfine comprise entre 8 et 30%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 50 et 94%, une teneur en bloc polyoléfine comprise entre 10 et 25%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 70 et 92%, une teneur en bloc polyoléfine comprise entre 2 et 98%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 70 et 92%, une teneur en bloc polyoléfine comprise entre 5 et 70%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 70 et 92%, une teneur en bloc polyoléfine comprise entre 6 et 50%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 70 et 92%, une teneur en bloc polyoléfine comprise entre 8 et 30%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 70 et 92%, une teneur en bloc polyoléfine comprise entre 10 et 25%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 75 et 90%, une teneur en bloc polyoléfine comprise entre 2 et 98%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 75 et 90%, une teneur en bloc polyoléfine comprise entre 5 et 70%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 75 et 90%, une teneur en bloc polyoléfine comprise entre 6 et 50%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 75 et 90%, une teneur en bloc polyoléfine comprise entre 8 et 30%, en poids par rapport au poids total du copolymère à blocs, la somme étant égale à 100%.

Avantageusement, le copolymère à blocs utile selon l'invention comporte une teneur en bloc alkylène comprise entre 1 et 15%, une teneur en bloc polyamide comprise entre 75 et 90%, une teneur en bloc polyoléfine comprise entre 10 et 25%, en poids par rapport au poids total du copolymère à blocs, la somme étant égale à 100%.

Avantageusement, dans le copolymère à blocs utile selon l'invention comprenant un bloc polyamide, un bloc polyoléfine et un bloc alkylène tel que défini ci-dessus, le bloc polyoléfine est un polybutadiène.

Avantageusement, dans le copolymère à blocs utile selon l'invention comprenant un bloc polyamide, un bloc polyoléfine et un bloc alkylène tel que défini ci-dessus, le bloc polyoléfine est un polybutadiène terminé par des fonctions alcools.

Avantageusement, dans le copolymère à blocs utile selon l'invention comprenant un bloc polyamide, un bloc polyoléfine et un bloc alkylène tel que défini ci-dessus, le bloc polyoléfine est un polybutadiène et le bloc alkylène est un diacide en C₈-C₃₆, en particulier de C₁₀-C₃₆.

Avantageusement, dans le copolymère à blocs utile selon l'invention comprenant un bloc polyamide, un bloc polyoléfine et un bloc alkylène tel que défini ci-dessus, le bloc polyoléfine est un polybutadiène et le bloc alkylène est un diacide gras.

Avantageusement, dans le copolymère à blocs utile selon l'invention comprenant un bloc polyamide, un bloc polyoléfine et un bloc alkylène tel que défini ci-dessus, le bloc polyoléfine est un polybutadiène et le bloc alkylène est un dimère d'acide gras.

Avantageusement, dans le copolymère à blocs utile selon l'invention comprenant un bloc polyamide, un bloc polyoléfine et un bloc alkylène tel que défini ci-dessus, le bloc polyoléfine est un polybutadiène terminé par des fonctions alcools et le bloc alkylène est un diacide en C₈-C₃₆, en particulier de C₁₀-C₃₆.

Avantageusement, dans le copolymère à blocs utile selon l'invention comprenant un bloc polyamide, un bloc polyoléfine et un bloc alkylène tel que défini ci-dessus, le bloc polyoléfine est un polybutadiène terminé par des fonctions alcools et le bloc alkylène est un diacide gras.

Avantageusement, dans le copolymère à blocs utile selon l'invention comprenant un bloc polyamide, un bloc polyoléfine et un bloc alkylène tel que défini ci-dessus, le bloc polyoléfine est un polybutadiène terminé par des fonctions alcools et le bloc alkylène est un dimère d'acide gras.

### Viscosité

Le copolymère à blocs utile selon l'invention présente une viscosité à l'état fondu allant de 300 à 20 000 Pa.s, en particulier de préférence allant de 500 à 15 000 Pa.s, de préférence allant de 500 à 10 000 Pa.s, et plus particulièrement de allant de 500 à 5 000 Pa.s mesurée à 230°C par rhéologie oscillatoire à une fréquence de 1 Hz, 5% de déformation, selon la norme ISO 6721-10 :1999. La méthode de mesure suivie pour effectuer cette mesure est la suivante :
Plan plan : 30 mn à 230°C, 5% de déformation selon les conditions opératoires suivantes :
Appareil : PHYSICA MCR301
Géométrie : plans parallèles de 25mm de diamètre
Températures : 230°C
Fréquence : 100 à 0.01Hz
Durée : 10minutes
Atmosphère : Balayage d'azote.

### Bloc allongeur de chaîne

Le copolymère à blocs utile selon l'invention peut comprendre éventuellement au moins un bloc allongeur de chaîne.

Ce bloc allongeur de chaîne est de structure :

Y1-A'-Y1

avec A' étant un biradical hydrocarboné de structure non polymérique (ni polymère, ni oligomère, ni prépolymère),
porteur de 2 fonctions réactives terminales Y1 identiques (tel que défini dans la formule ci-dessus) , réactives par polyaddition (sans élimination de sous-produit de réaction), avec au moins une fonction en fin de chaîne du copolymère à bloc utile selon l'invention, de préférence de masse moléculaire en nombre inférieure à 500 et plus préférentiellement inférieure à 400,
en particulier la fonction réactive Y1 est choisie parmi: oxazine, oxazoline, oxazolinone, oxazinone, imidazoline, époxy, isocyanate, maléimide, anhydride cyclique.

Comme exemples convenables d'allongeurs de chaîne, on peut citer les suivants :
- lorsque les terminaisons de chaîne sont des fonctions NH2 ou OH, de préférence NH2, l'allongeur de chaîne Y1-A'-Y1 correspond à :
   Y1 choisi parmi les groupements : maléimide, isocyanate éventuellement bloqué, oxazinone et oxazolinone, anhydride cyclique, de préférence oxazinone, anhydride et oxazolinone et

A' est un espaceur ou radical carboné portant les fonctions ou groupements réactifs Y1, choisi parmi :
- une liaison covalente entre deux fonctions (groupements) Y1 dans le cas où Y1 = oxazinone et oxazolinone ou
- une chaîne hydrocarbonée aliphatique ou une chaîne hydrocarbonée aromatique et/ou cycloaliphatique, ces deux dernières comprenant au moins un cycle de 5 ou 6 atomes de carbone éventuellement substitué, avec éventuellement ladite chaîne hydrocarbonée aliphatique ayant éventuellement un poids moléculaire en nombre de 14 à 200 g.mol-1,

L'allongeur de chaîne Y1-A'-Y1 peut également correspondre à une structure dans laquelle
Y1 est un groupement caprolactame et
A' est un radical carbonyle tel que le carbonyl biscaprolactame ou à A' pouvant être un téréphtaloyle ou un isophtaloyle,
L'allongeur de chaîne Y1-A'-Y1 peut également porter un groupement Y1 d'anhydride cyclique et de préférence cet allongeur est choisi parmi un dianhydride carboxylique cycloaliphatique et/ou aromatique et plus préférentiellement il est choisi parmi : le dianhydride éthylènetétracarboxylique, le dianhydride pyromellitique, le dianhydride 3,3',4,4'-biphényltétracarboxylique, le dianhydride 1,4,5,8-naphtalènetétracarboxylique, le dianhydride perylènetétracarboxylique, le dianhydride 3,3',4,4'-benzophénone tétracarboxylique, le dianhydride 1,2,3,4-cyclobutanetétracarboxylique, le dianhydride hexafluoroisopropylidène bisphtalique, le dianhydride 9,9-bis(trifluorométhyl)xanthène tétracarboxylique, le dianhydride 3,3',4,4'-diphénylsulfonetétracarboxylique, le dianhydride bicyclo[2.2.2]oct-7-ène-2,3,5,6-tétracarboxylique, le dianhydride 1,2,3,4-cyclopentanetétracarboxylique, le dianhydride 3,3',4,4'-diphényl éther tétracarboxylique ou leurs mélanges
   et
   - lorsque les terminaisons de chaîne sont des fonctions COOH
ledit allongeur de chaîne Y1-A'-Y1 correspond à :
   Y1 choisi parmi les groupements : oxazoline, oxazine, imidazoline, aziridine, comme le 1, 1'-iso- ou téré- phtaloyl-bis (2-methyl aziridine) ou epoxy,
   A' étant un espaceur ou un radical carboné tel que défini ci-dessus.

Plus particulièrement, quand dans ledit allongeur Y1-A'-Y1, ladite fonction Y1 est choisie parmi oxazinone, oxazolinone, oxazine, oxazoline ou imidazoline, en particulier oxazoline, dans ce cas, dans l'allongeur de chaîne représenté par Y1-A'-Y1, A' peut représenter un alkylène tel que -(CH2)m- avec m allant de 1 à 14 et de préférence de 2 à 10 ou A' peut représenter un cycloalkylène et/ou un arylène substitué (alkyle) ou non substitué, comme les arylènes benzéniques, tels que les phénylènes o-, m-, -p ou les arylènes naphtaléniques et de préférence A' est un arylène et/ou un cycloalkylène.

Dans le cas où Y1 est un époxy, l'allongeur de chaîne peut être choisi parmi les bisphenol A diglycidyl éther (DGEBA), et son dérivé hydrogéné (cycloaliphatique) bisphenol F diglycidyl éther, le tétrabromo bisphénol A diglycidyl éther, ou les hydroquinone diglycidyl éther, éthylène glycol diglycidyl éther, propylène glycol diglycidyl éther, butylène glycol diglycidyl éther, néopentyl glycol diglycidyl éther, 1,4-butanediol diglycidyl éther, 1,6-hexanediol diglycidyl éther, cyclohexanediméthanol diglycidyl éther, polyéthylène glycol diglycidyl éther de Mn <500, polypropylène glycol diglycidyl éther de Mn <500, polytétraméthylène glycol diglycidyl éther de Mn <500, résorcinol diglycidyl éther, néopentylglycol diglycidyl éther, bisphenol A polyéthylène glycol diglycidyl éther de Mn <500, bisphénol A polypropylèneglycol diglycidyl éther de Mn <500, diglycidyl esters de diacide carboxylique tel que le glycidyl ester d'acide téréphtalique ou les dioléfines (diènes) époxydées ou acides gras à double insaturation éthylénique époxydée, le diglycidyl 1,2-Cyclohexanedicarboxylate, et leurs mélanges.

Dans le cas du carbonyl- ou térephtaloyl- ou isophtaloyl-biscaprolactame comme allongeur de chaîne Y1-A'-Y1, les conditions préférées évitent l'élimination de sous-produit, comme le caprolactame lors de ladite polymérisation et mise en œuvre à l'état fondu.

Dans le cas éventuel cité ci-haut où Y1 représente une fonction isocyanate bloqué, ce blocage peut être obtenu par des agents bloquants de la fonction isocyanate, comme la epsilon-caprolactame, la méthyl éthyl kétoxime, la diméthyl pyrazole, le di éthyl malonate.

De même, dans le cas où l'allongeur est un dianhydride réagissant avec des fonctions NH2 issues du copolymère à blocs, les conditions préférées évitent toute formation de cycle imide lors de la polymérisation et lors la mise en œuvre à l'état fondu.

Pour les terminaisons OH ou NH2 du copolymère à bloc, le groupement Y1 est choisi de préférence parmi : anhydride, isocyanate (non bloqué), oxazinone et oxazolinone, plus préférentiellement oxazinone et oxazolinone, avec comme espaceur (radical) A' étant comme défini ci-haut.

Comme exemples d'allongeurs de chaîne portant des fonctions réactives Y oxazoline ou oxazine convenables à la mise en œuvre de l'invention, on pourra se référer à ceux décrits sous références « A », « B », « C » et « D » à la page 7 de la demande EP 0 581 642, ainsi qu'à leurs procédés de préparation et leurs modes de réaction qui y sont exposés. « A » dans ce document est la bisoxazoline, « B » la bisoxazine, « C » la 1,3 phénylène bisoxazoline et « D » la 1,4-phénylène bisoxazoline.

A titre d'exemple, dans le cas où les terminaisons CO2H du copolymère à blocs et l'allongeur de chaîne Y1-A'-Y1 est la 1,4-phénylène bisoxazoline, le produit de réaction obtenu possède au moins un motif récurrent de structure suivante :

-O-C(O)-PA-C(O)-O-R1-NH-C(O)-A'-C(O)-NH-R1-

dans laquelle :
PA est un polyamide à terminaisons acides HO-C(O)-PA-C(O)-OH tel que défini ci-dessus,
R1 (CH₂)₂, et
A' est un phényle.

Comme exemples d'allongeurs de chaîne à fonction réactive Y1 imidazoline convenables à la mise en œuvre de l'invention, on pourra se référer à ceux décrits (« A » à « F ») à la page 7 à 8 et tableau 1 de la page 10 dans la demande EP 0 739 924 ainsi qu'à leurs procédés de préparation et leurs modes de réaction qui y sont exposés.

Comme exemples d'allongeurs de chaîne à fonction réactive Y1 = oxazinone ou oxazolinone qui conviennent à la mise en œuvre de l'invention, on peut se référer à ceux décrits sous références « A » à « D » à la page 7 à 8 de la demande EP 0 581 641, ainsi qu'à leurs procédés de préparation et leurs modes de réaction qui y sont exposés.

Comme exemples de groupements Y1 oxazinones (cycle à 6 atomes) et oxazolinones (cycle à 5 atomes) convenables, on peut citer les groupements Y1 dérivés de : benzoxazinone d'oxazinone ou d'oxazolinone, avec comme espaceur A' pouvant être une simple liaison covalente avec pour allongeurs correspondants respectifs étant : bis- (benzoxazinone), bisoxazinone et bisoxazolinone.

A' peut être également un alkylène en C1 à C14, de préférence en C2 à C10 mais de préférence A' est un arylène et plus particulièrement il peut être un phénylène (substitué par Y1 en positions 1,2 ou 1,3 ou 1,4) ou un radical naphtalène (disubstitué par Y1) ou un phtaloyle (iso- ou téréphtaloyle) ou A' peut être un cycloalkylène.

Pour les fonctions Y1 comme oxazine (cycle à 6), oxazoline (cycle à 5) et imidazoline (cycle à 5), le radical A' peut être comme décrit ci-haut avec A' pouvant être une simple liaison covalente et avec les allongeurs correspondants respectifs étant : bisoxazine, bisoxazoline et bisimidazoline. A' peut être également un alkylène en C1 à C14, de préférence en C2 à C10. Le radical A' est de préférence un arylène et, plus particulièrement, il peut être un phénylène (substitué par Y1 en positions 1,2 ou 1,3 ou 1,4) ou un radical naphtalène (disubstitué par Y1) ou un phtaloyle (iso- ou téréphtaloyle) ou A' peut être un cycloalkylène.

Dans le cas où Y1 = aziridine (hétérocycle azoté à 3 atomes équivalent à l'oxyde d'éthylène en remplaçant l'éther -O- par -NH-), le radical A' peut être un phtaloyle (1,1'iso- ou téré- phtaloyle) avec comme exemple d'allongeur de ce type, la 1, 1' isophtaloyl-bis(2-méthyl aziridine).

La présence d'un catalyseur de la réaction entre le copolymère à bloc et ledit allongeur Y1-A'-Y1 à un taux allant de 0,001 à 2%, de préférence de 0,01 à 0,5% par rapport au poids total de deux co-réactants cités peut accélérer la réaction de (poly)addition et ainsi raccourcir le cycle de production. Un tel catalyseur peut être choisi parmi : 4,4' diméthyl aminopyridine, l'acide p-toluène sulfonique, acide phosphorique, NaOH et éventuellement ceux décrits pour une polycondensation ou transestérification comme décrits dans EP 0 425 341, page 9, lignes 1 à 7.

Selon un cas plus particulier du choix dudit allongeur, A' peut représenter un alkylène, tel que -(CH₂)ₘ- avec m allant de 1 à 14 et de préférence de 2 à 10 ou représente un arylène substitué alkyle ou non substitué, comme les arylènes benzéniques (comme les phénylènes o-, m-, -p) ou naphtaléniques (avec arylènes : naphtalenylènes). De préférence, A' représente un arylène qui peut être benzénique ou naphténique substitué ou non.

De préférence, l'allongeur de chaîne est le dianhydride 3,3',4,4'-benzophénone tétracarboxylique. Plus particulièrement, le copolymère à blocs se termine par des extrémités amine et le dianhydride 3,3',4,4'-benzophénone tétracarboxylique, utilisé en tant qu'allongeur de chaine réagit avec ces extrémités amine.

Comme déjà précisé, ledit allongeur de chaîne a une structure non polymérique et de préférence une masse moléculaire en nombre inférieure à 500, plus préférentiellement inférieure à 400.

De préférence, le copolymère à blocs utile selon l'invention comporte au moins un bloc allongeur de chaîne situé à une ou plusieurs extrémités polyamide du copolymère.

Selon un premier mode de réalisation, le copolymère à blocs est de formule suivante :

(Y1-A'-Ya)-(copo blocs)-[(Ya-A'-Ya)-(copo blocs)]m-(Ya-A' Y1)

dans laquelle
- copo blocs désigne le copolymère à blocs tel que défini ci-dessus,
- Ya-A'-Ya désigne un allongeur de chaine Y1-A'-Y1 tel que défini ci-dessus pour lequel les fonctions réactives Y1 ont réagi avec les extrémités du copolymère à blocs conduisant à des fonctions Ya,
- (Y1-A'-Ya) et -(Ya-A' Y1) désignent des allongeurs de chaine dans lequel une seule fonction réactive a réagi,
- m est un entier entre 0 et 100.

Selon un second mode de réalisation, le copolymère à blocs est de formule suivante :

X-(copo blocs)-(Ya-A'-Ya)-[(copo blocs)-(Ya-A'-Ya)]m-(copo blocs)-X

dans laquelle
- X désigne la fonction libre du copolymère à blocs,
- les autres éléments ayant les mêmes significations que pour le mode de réalisation précédemment décrit.

Le type de structure de copolymère obtenu dépendra du nombre d'équivalents d'allongeur de chaine introduit dans le milieu réactionnel lors de la préparation dudit allongeur de chaine.

Le taux dedit allongeur dans le dit copolymère à blocs varie de 1 à 20%, en particulier de 5 à 20% en poids par rapport au poids total du copolymère à blocs.

Avantageusement, le copolymère à blocs utile selon l'invention comprend (ou est constitué de)
- au moins un bloc polyamide, dont la teneur en bloc(s) polyamide est comprise entre 2 et 98% en poids par rapport au poids total du copolymère à blocs,
- au moins un bloc polyoléfine, dont la teneur en bloc(s) polyoléfine est comprise entre 2 et 98% en poids par rapport au poids total du copolymère à blocs,
- au moins un bloc alkylène, dont la teneur en bloc(s) alkylène est comprise entre 1 et 15% en poids par rapport au poids total du copolymère à blocs, et
- au moins un bloc allongeur de chaîne, dont la teneur en bloc(s) dudit allongeur de 1 à 20% par rapport au poids total du copolymère à blocs, le total étant égal à 100%.

Avantageusement, dans ce dernier copolymère à blocs utile selon l'invention, ledit allongeur comporte des fonctions réactives Y1, choisies parmi les anhydride, isocyanate (non bloqué), oxazinone et oxazolinone, plus préférentiellement anhydride, oxazinone et oxazolinone, l'espaceur ou le radical A' étant comme défini ci-haut.

Avantageusement, dans le copolymère à bloc utile selon l'invention comprenant (ou constitué de) un bloc polyamide, un bloc alkylène et un bloc polyoléfine tel que défini ci-dessus, le taux dedit allongeur de 5 à 20% par rapport au poids total du copolymère à blocs, le total étant égal à 100%.

Avantageusement, dans ce dernier copolymère à blocs utile selon l'invention, ledit allongeur comporte des fonctions réactives Y1, choisies parmi les anhydride, isocyanate (non bloqué), oxazinone et oxazolinone, plus préférentiellement anhydride, oxazinone et oxazolinone, l'espaceur ou le radical A' étant comme défini ci-haut.

### Masse moléculaire

Le copolymère à blocs peut présenter une masse moléculaire en nombre mesurée par potentiométrie comprise entre 5 000 et 50 000, de préférence entre 7 000 et 40 000 g/mol.

La masse moléculaire en nombre est calculée selon la formule suivante : Mn = 2/([COOH]+[NH2]) en g/mol

Avec les concentrations en fins de chaine acide [COOH] et amine [NH2] en eq/g.

Le dosage potentiométrique des fins de chaine acide se fait par l'hydroxyde de tétra-n-butylammonium dans l'alcool benzylique 0.02N.

Le dosage potentiométrique des fins de chaine amine se fait par l'acide perchlorique 0.02N dans le m-crésol.

Selon un premier mode de réalisation de l'invention, lorsque le copolymère à blocs comporte un allongeur de chaine, alors le ou les blocs polyamide présentent chacun une masse moléculaire en nombre mesurée par potentiométrie comprise entre 4 000 et 15 000.

Selon un second mode de réalisation de l'invention, lorsque le copolymère à blocs ne comporte pas d'allongeur de chaine, alors le ou les blocs polyamide présentent chacun une masse moléculaire en nombre mesurée par potentiométrie comprise entre 6 000 et 15 000.

Le copolymère à blocs utile selon l'invention est un copolymère thermoplastique. Le copolymère à blocs utile selon l'invention n'est pas un caoutchouc. Le copolymère à blocs utile selon l'invention n'est pas non plus un copolymère thermodurcissable.

Selon un mode de réalisation préféré de l'invention, le copolymère à blocs comprend :
- au moins un bloc polyamide, à terminaison amine, dont la teneur en bloc(s) polyamide est de 70 à 92% par rapport au poids total du copolymère à blocs ;
- au moins un bloc polyoléfine, qui est du polybutadiène, dont la teneur en bloc(s) polyoléfine est de 10 à 25% par rapport au poids total du copolymère à blocs ;
- au moins un bloc alkylène, qui est un diacide en C₈-C₃₆, dont la teneur en bloc(s) alkylène est de 1 à 15% par rapport au poids total du copolymère à blocs ; et
présentant une viscosité à l'état fondu allant de 300 à 20 000 Pa.s, en particulier de 300 à 15 000 Pa.s mesurée à 230°C par rhéologie oscillatoire.

Selon un second mode de réalisation préféré de l'invention, le copolymère à blocs comprend
- au moins un bloc polyamide, à terminaison amine, dont la teneur en bloc(s) polyamide est de 70 à 92% par rapport au poids total du copolymère à blocs ;
- au moins un bloc polyoléfine, qui est du polybutadiène, dont la teneur en bloc(s) polyoléfine est de 10 à 25% par rapport au poids total du copolymère à blocs ;
- au moins un bloc alkylène, qui est un diacide en C₈-C₃₆, dont la teneur en bloc(s) alkylène est de 1 à 15% par rapport au poids total du copolymère à blocs ; et
- au moins un bloc allongeur de chaîne en une teneur de 1 à 20% par rapport au poids total du copolymère à blocs,
présentant une viscosité à l'état fondu allant de 300 à 20 000 Pa.s, en particulier de 300 à 15 000 Pa.s mesurée à 230°C par rhéologie oscillatoire.

### Procédé de préparation du copolymère à blocs

Le procédé de préparation du copolymère à blocs présent dans la composition de gainage de l' élément composite selon l'invention comprend une étape de mélange des différents blocs.

De préférence, le procédé comprend les étapes successives suivantes :
- une étape de mélange des blocs polyoléfine et alkylène, le rapport molaire entre des blocs polyoléfine et les blocs alkylène étant supérieur ou égal à ½, puis
- une étape de mélange du ou des blocs polyamide avec le mélange obtenu à l'étape précédente.

Le procédé de préparation peut comprendre une étape supplémentaire de mélange de blocs allongeur de chaine tel que défini ci-dessus avec le mélange obtenu à l'étape précédente.

### Composition

La composition de gainage se trouve de préférence sous la forme de poudre ou de granulés.

### Les additifs

La composition de gainage de l'élément composite selon l'invention peut également comprendre en outre au moins un additif.

Cet additif peut notamment être choisi parmi les adjuvants aidant à la transformation (ou processing aids), les charges, les stabilisants thermiques, comme les stabilisants thermiques organiques à base de phosphite, les stabilisants thermiques à base de cuivre, les colorants, les agents de démoulage, les agents d'ignifugation, les agents tensio-actifs, les azurants optiques, les anti-oxydants, tels que ceux à base de phénol ou le produit commercialisé sous la dénomination Naugard 445^{®} commercialisé par la société CHEMTURA, les anti-UV tels que les HALS et leurs mélanges. De préférence, les colorants sont présents en une proportion de 0 à 1,5%, notamment de 0,5 à 1% en poids par rapport au poids total de la composition. De préférence, les stabilisants thermiques sont présents en une proportion de 0 à 2%, notamment de 0,5 à 1% en poids par rapport au poids total de la composition et les antioxydants sont présents en proportion de 0 à 2%, notamment de 0,5 à 1% en poids par rapport au poids total de la composition.

La composition peut également comprendre des catalyseurs, tels que de l'acide phosphorique, hypophosphoreux (H₃PO₂, H₃PO₃ et H₃PO₄).

Parmi les adjuvants aidant à la transformation ou processing aids, on peut citer les stéarates, tels que les stéarates de calcium ou de zinc, les cires naturelles, les polymères comprenant du tétrafluoroéthylène (TFE).

La proportion pondérale en processing aids est classiquement comprise entre 0,01 et 0,3% en poids, avantageusement entre 0,02 et 0,1% en poids, par rapport au poids total de la composition.

Parmi les charges, on peut citer la silice, le graphite, le graphite expansé, le noir de carbone, les billes de verre, le kaolin, la magnésie, les scories, le talc, les nanocharges (nanotubes de carbone), les pigments, oxydes métalliques (oxyde de titane), les métaux, les fibres (aramides, de verre, de carbone).

En fonction de la nature des charges, la quantité de ces dernières peut représenter jusqu'à 30% en poids, du poids total de la composition.

### Les polymères supplémentaires

Une composition de gainage utile à l'invention peut en outre comprendre un ou plusieurs polymères supplémentaires, un tel polymère étant distinct du (des) copolymère(s) à blocs mentionnés ci-avant.

Avantageusement, ce polymère supplémentaire peut notamment être choisi parmi un copolymère à blocs autre que celui défini précédemment, un polyamide, un polyamide-bloc-éther, un polyétheramide, un polyesteramide, un polysulfure de phénylène (PPS), un polyphénylène oxyde (PPO), un polymère fluoré, un caoutchouc naturel, un caoutchouc synthétique et leurs mélanges.

Le polymère supplémentaire peut également être choisi parmi l'amidon, qui peut être modifié et/ou formulé, la cellulose ou ses dérivés comme l'acétate de cellulose ou les éthers de cellulose, le polyacide lactique, le polyacide glycolique et les polyhydroxyalcanoates.

De préférence, le polymère supplémentaire est choisi parmi les polyamides aliphatiques et les polyamides-bloc-éthers. Parmi les polyamides aliphatiques, on peut notamment citer les polyamides à longue chaîne tels que les PA11, PA12, PA6.10, PA6.12, PA6.14, PA10.10, PA10.12 et PA12.12.

La composition peut ainsi contenir jusqu'à 20% en poids, par rapport au poids total de la composition, d'au moins un polymère supplémentaire.

### Procédé de préparation de la composition

Ce procédé comprend une étape d'incorporation des éventuels additifs et polymères supplémentaires au sein de la matrice du copolymère à blocs.

### Gainage

Selon un mode de réalisation, la gaine comprend une unique couche de la composition de gainage définie précédemment.

Selon un autre mode de réalisation, la gaine comprend plusieurs couches, au moins l'une d'entre elles comprenant la composition de gainage définie précédemment.

Selon un mode de réalisation préféré, la gaine comprend une unique couche de la composition de gainage, la composition de gainage consistant en le copolymère à blocs défini précédemment.

La gaine présente dans l'élément composite de l'invention présente de préférence une épaisseur variant de 35 µm à 200 µm.

Selon un mode de réalisation préféré de l'invention, la composition de gainage comporte au moins 70% en poids du copolymère à blocs selon l'invention.

Selon un mode de réalisation particulier, l'élément composite de l'invention comprend de 70 à 85%, en poids par rapport au poids de l'élément composite, du ou des éléments filaires et 15 à 30% en poids, par rapport au poids de l'élément composite, de la composition de gainage telle que définie précédemment.

### Figures

La figure 1 annexée représente de manière très schématique (sans respect d'une échelle spécifique), en coupe transversale, un premier exemple d'un élément composite conforme à l'invention. Cet élément composite noté R-1 est constitué d'un élément filaire (10) constitué d'un filament unitaire ou monofilament de diamètre relativement élevé (par exemple entre 0,10 et 0,50 mm), par exemple en acier au carbone, qui est recouvert d'une gaine (11) d'un copolymère à blocs tel que défini précédemment, dont l'épaisseur minimale est notée Em1 sur cette figure 1.
La figure 2 schématise en coupe transversale un deuxième exemple d'un élément composite conforme à l'invention. Cet élément composite noté R-2 est constitué d'un élément filaire (20) constitué en fait de deux filaments unitaires ou monofilaments (20a, 20b) de diamètre relativement élevé (par exemple entre 0,10 et 0,50 mm) torsadés ou câblés ensemble, par exemple en acier au carbone ; l'élément filaire (20) est recouvert d'une gaine (21) d'un copolymère à blocs tel que défini précédemment.
La figure 3 schématise en coupe transversale un autre exemple d'élément composite selon l'invention. Cet élément composite noté R-3 est constitué de trois éléments filaires (30) constitués chacun d'un filament unitaire ou monofilament de diamètre relativement élevé (par exemple entre 0,10 et 0,50 mm) par exemple en acier au carbone ; l'ensemble constitué par les trois éléments filaires (30) par exemple alignés (formant ainsi par exemple un non-tissé) est recouvert d'une gaine (31) d'un copolymère à blocs tel que défini précédemment, par exemple en polyamide ou en polyester.
La figure 4 schématise en coupe transversale un autre exemple d'élément composite selon l'invention. Cet élément composite noté R-4 est constitué de trois éléments filaires (40) constitués chacun de deux monofilaments (40a, 40b) de diamètre relativement élevé (par exemple entre 0,10 et 0,50 mm) torsadés ou câblés ensemble, par exemple en acier au carbone ; l'ensemble constitué par les trois éléments filaires (40) par exemple alignés est recouvert d'une gaine (41) d'un copolymère à blocs tel que défini précédemment, par exemple en polyamide ou en polyester.

### Procédé de préparation de l'élément composite

L'élément composite de l'invention est susceptible d'être préparé selon un procédé spécifique comprenant une étape de recouvrement du ou des éléments filaires par un copolymère à blocs tel que défini précédemment.

Cette étape est conduite de manière connue de l'homme du métier, par exemple en ligne et en continu ou pas. Elle consiste par exemple simplement à faire passer le ou les éléments filaires, à travers des filières de diamètre adapté, dans des têtes d'extrusion chauffées à des températures appropriées, ou encore dans un bain d'enduction contenant le copolymère à blocs mis préalablement en solution dans un solvant (ou mélange de solvants) organique approprié.

Selon un premier mode de réalisation préférentiel possible, le ou les éléments filaires sont préalablement chauffés, par exemple par induction ou par rayonnement IR, avant passage dans les têtes d'extrusion respectives. En sortie de chaque tête d'extrusion, le ou les éléments filaires ainsi gainés sont ensuite refroidis suffisamment de manière à solidifier la couche de polymère respective, par exemple avec de l'air ou un autre gaz froid, ou par passage dans un bain d'eau suivi d'une étape de séchage.

A titre d'exemple, le recouvrement d'un élément filaire de diamètre proche de 0,6 mm, par exemple d'un câble métallique constitué simplement de deux monofils élémentaires de diamètre 0,3 mm torsadés ensemble (comme illustré par exemple à la figure 2), par une première couche de copolymère à blocs d'épaisseur maximale égale à environ 0,4 mm, pour l'obtention d'un élément filaire gainé ayant un diamètre total d'environ 1 mm, est réalisé sur une ligne d'extrusion-gainage comportant deux filières, une première filière (contre-filière ou filière amont) de diamètre égal à environ 0,65 mm et une seconde filière (ou filière aval) de diamètre égal à environ 0,95 mm, disposées toutes deux dans une tête d'extrusion portée à environ 300°C. Le copolymère à blocs, fondu à une température de 290°C dans l'extrudeuse, recouvre ainsi l'élément filaire, par le biais de la tête de gainage, à une vitesse de défilement de l'élément filaire égale typiquement à plusieurs dizaines de m/min, pour un débit de pompe d'extrusion typiquement de plusieurs dizaines de cm3/min. En sortie de ce gainage, l'élément filaire peut être immergé dans un bac de refroidissement rempli d'eau froide, pour solidifier et figer le polyamide dans son état amorphe, puis séché par exemple par passage de la bobine de réception à l'étuve.

A l'issue de ces opérations, par exemple directement en sortie de la tête de gainage ou du bain d'enduction (après évaporation du solvant dans le deuxième cas) précédemment décrits, l'élément filaire composite traverse un four-tunnel, par exemple de plusieurs mètres de long, pour y subir un traitement thermique sous air.

Cette température de traitement est par exemple comprise entre 150°C et 300°C, pour des durées de traitement de quelques secondes à quelques minutes selon les cas, étant entendu que la durée du traitement sera d'autant plus courte que la température sera élevée, et que le traitement thermique ne doit évidemment pas conduire à une refusion ou même un ramollissement excessif des matières utilisées.

Ainsi terminé, l'élément composite de l'invention est avantageusement refroidi, par exemple à l'air, pour éviter des problèmes de collage parasite lors de son enroulement sur la bobine de réception finale.

L'homme du métier saura ajuster la température et la durée du traitement en fonction des conditions particulières de mise en œuvre de l'invention, notamment de la nature exacte du élément composite fabriqué, notamment selon que l'on traite des monofilaments pris individuellement, des câbles constitués de plusieurs monofilaments ou des groupes de tels monofilaments ou câbles tels que des bandelettes.

En particulier, l'homme du métier aura avantage à réaliser des balayages en température et durée de traitement, de manière à rechercher, par approches successives, les conditions opératoires conduisant aux meilleurs résultats d'adhésion, pour chaque mode de réalisation particulier de l'invention.

Les étapes du procédé de l'invention précédemment décrites peuvent être avantageusement complétées par un traitement final de réticulation tridimensionnelle du renfort, pour renforcer encore sa propre cohésion, notamment dans les cas où cet élément composite est destiné à une utilisation ultérieure à une température relativement élevée, typiquement supérieure à 100°C.

Cette réticulation pourra être conduite par tout moyen connu, par exemple par des moyens de réticulation physiques tels que bombardement ionique ou électronique, ou par des moyens de réticulation chimiques, par exemple en introduisant un agent réticulant (e.g. huile de lin) dans la composition, par exemple au cours de son extrusion, ou encore en introduisant dans la composition un système de vulcanisation (i.e., à base de soufre).

Dans le cas où l'élément composite est utilisé dans un bandage pneumatique ou non pneumatique, une réticulation pourra être également obtenue lors de la cuisson de ces bandages pneumatiques (ou plus généralement des articles en caoutchouc) que l'élément composite de l'invention peut être destiné à renforcer, grâce au propre système de réticulation présent dans les compositions de caoutchouc diénique constitutives de tels bandages (ou articles) et entrant au contact de l'élément composite de l'invention.

L'élément composite de l'invention est utilisable directement, c'est-à-dire sans nécessiter un quelconque système adhésif supplémentaire, comme élément de renforcement d'une matrice de caoutchouc diène, par exemple dans un bandage pneumatique ou non pneumatique. Il est avantageusement utilisable pour le renforcement de bandages pneumatiques de tous types de véhicules, en particulier véhicules tourisme ou véhicules industriels tels que Poids-lourd.

A titre d'exemple, la figure 5 annexée représente de manière très schématique (sans respect d'une échelle spécifique), une coupe radiale d'un bandage pneumatique conforme à l'invention pour véhicule du type tourisme.

Ce bandage pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Ce bandage pneumatique 1 a par exemple pour caractéristique essentielle qu'au moins une de ses armatures de sommet ou de carcasse comporte un élément composite selon l'invention. Selon un autre exemple de mode de réalisation possible de l'invention, ce sont les tringles 5 qui pourraient être constituées d'un élément composite selon l'invention.

### EXEMPLES

### I. Synthèse des copolymères à blocs

### 1/Synthèse du copolymère : Ref 1 (comparatif)

Le mélange de polybutadiène et de dimère d'acide gras en un rapport molaire de ½ (polybutadiène/dimère d'acide gras) est effectué.

Puis, le mélange obtenu est mélangé au polyamide comme décrit ci-dessous.
- Fabrication de PA 11 diamine de masse moléculaire en nombre 5000 g/mol :
   Dans un autoclave de 100L muni d'un agitateur type Paravisc, sont introduits 33 kg d'acide 11-aminoundecanoïque, 0.716 kgd'hexaméthylène diamine, 33g d'Irganox 1098, 23,3g d'acide orthophosphorique 85% et 5kg d'eau déionisée. Le milieu est inerté à l'azote puis chauffé jusqu'à 240°C matière sous agitation. La pression est alors de 24 bars. Lorsque cette température est atteinte, la pression est ramenée à pression atmosphérique par détente et un balayage sous azote est appliqué pendant 90 minutes.

Le produit obtenu est ainsi vidangé dans l'eau et récupéré sous forme d'écailles.

Les fins de chaîne sont dosées par potentiométrie :
NH₂ = 0.368 meq/g

La Masse moléculaire est 5434 g/mol.
- Fabrication d'un Pentabloc :
   Dans un autoclave de 100L muni d'un agitateur type Paravisc, sont introduits 3.786kgde Krasol^{®} LBH-P 2000 (viscosité 13000 cP, Mn = 2100, 1.8 mol), 2.026kg de Pripol^{®} 1013 (M=575 g/mol, 3.6 mol), et 6.85g d'acide orthophosphorique 85%. Le milieu est agité et est porté à une température de 220°C sous 200mbars pendant 2h. Le milieu est ramené à pression atmosphérique et refroidi. 19.14kg 3.6mol) du polyamide préparé précédemment sont ajoutés. Le milieu est chauffé à 235°C sous balayage azote et agitation. Puis un vide de 200mbars est appliqué pendant 2h Le produit est ensuite vidangé dans l'eau et granulé.

Le dosage potentiométrique des fins de chaine :
NH₂ = 0.132 meq/g
COOH = 0.013 meq/g, soit Mn = 13800 g/mol

La viscosité à l'état fondu est également mesurée par rhéologie oscillatoire à 288 Pa.s à 230°C/1Hz

### Dosage potentiométrique des fins de chaine aminés :

500 mg de polymère sont dissouts dans 80g de m-crésol à130°C pendant 1h.

De l'acide perchlorique 0.02N (dans l'acide acétique) est ajouté jusqu'à neutralisation des fins de chaine amines. Cette neutralisation s'accompagne par une modification de potentiel, suivi à l'aide d'électrodes.

### Dosage potentiométrique des fins de chaine acide :

1g de polymère est dissout dans 80g de ter-butylphénol à130°C pendant 1h.

De l'hydroxyde de tétra-n-butylammonium 0.02N est ajouté jusqu'à neutralisation des fins de chaine acide. Cette neutralisation s'accompagne par une modification de potentiel, suivi à l'aide d'électrodes.

### Calcul de la masse moléculaire :

La masse moléculaire est calculée selon la formule ci-dessous :

Mn = 2/([COOH]+[NH2])

Avec [COOH] et [NH2] signifiant les concentrations en fins de chaine amine et acide telles que définies ci-dessus.

### Mesure de la viscosité :

La méthode utilisée est celle décrite dans la description ci-dessus, selon la norme ISO 6721-10 : 1999.

Plan plan : 30 mn à 230°C, 5% de déformation selon les conditions opératoires suivantes :
Appareil : PHYSICA MCR301
Géométrie : plans parallèles de 25mm de diamètre
Températures : 230°C
Fréquence : 100 à 0.01Hz
Durée : 10minutes
Atmosphère : Balayage d'azote.

### 2/Synthèse du copolymère utile selon l'invention A

Le procédé de préparation du copolymère à blocs utile selon l'invention A est identique à celui du polymère Ref 1, à l'exception du polyamide PA11 qui présente une masse moléculaire 10 300 g/mol.

Les proportions sont les suivantes :
- Pour le PA11 terminé diamine :

| Acide 11-aminoundécanoïque | 33.000 kg |
|---|---|
| Héxaméthylènediamine | 0.353 kg |
| Eau | 5.000 kg |
| IRGANOX | 33.000 g |
| H3PO4 85% | 23.300 g |

- Pour le copolymère à blocs :
Krasol LBH-P2000 : 1.84 kg
Pripol 1013 : 0.985 kg
PA : 16.70 kg

Les fins de chaines dosées :
Pour le PA 11 :
NH2 = 0.193 meq/g, soit Mn = 10 300g/mol

Pour le copolymère à blocs
NH2 = 0.090 meq/g
COOH = 0.028 meq/g
Soit Mn = 16 950g/mol

La viscosité à l'état fondu est également mesurée par rhéologie oscillatoire à 1 310 Pa.s à 230°C/1Hz.

### 3/Synthèse du copolymère utile selon l'invention B

Le polymère Ref1 est ajouté dans une extrudeuse bi-vis co-rotative RHEOMEX PTW 16/25p équipée d'une filière 1 trou de diamètre 3mm avec 0.25% massique de dianhydride 3,3',4,4'-benzophénonetétracarboxylique. La vitesse de vis est de 400 rpm, le débit de 2,5 kg/h et un couple moyen de 30% et les fourreaux sont chauffés à une consigne de 230°C. En sortie de filière, le polymère est refroidi dans un bac à eau à 23°C puis granulé.

Les fins de chaine et la masse moléculaire Mn du polymère à blocs obtenu sont ensuite dosées par potentiométrie :
COOH = 0.024 meq/g
NH2 = 0.104 meq/g
Mn = 15 625 g/mol

La viscosité à l'état fondu est également mesurée par rhéologie oscillatoire à 1080 Pa.s à 230°C/1Hz.

**Tableau 1**

| Copolymères testés | Viscosité à l'état fondu (Pa.s) |
|---|---|
| Ref 1 | 288 |
| A | 1310 |
| B | 1080 |

### II. Préparation de la pièce extrudée/enduite

Le recouvrement d'un élément filaire de diamètre proche de 0,35 mm, par exemple d'un câble métallique constitué simplement de trois monofils élémentaires de diamètre 0,18 mm torsadés ensemble, par une première couche de copolymère à blocs d'épaisseur maximale égale à environ 0,25 mm au diamètre, pour l'obtention d'un élément filaire gainé ayant un diamètre total d'environ 0,6mm, est réalisé sur une ligne d'extrusion-gainage comportant deux filières, une première filière (contre-filière ou filière amont) de diamètre égal à environ 0,41 mm et une seconde filière (ou filière aval) de diamètre égal à environ 0,53 mm, disposées toutes deux dans une tête d'extrusion portée à environ 210°C.

Le copolymère à blocs, fondu à une température de 210°C à 230°C selon les zones de chauffe de la vis d'extrusion (Z1=210°C, Z2 = 220°C, Z3=230°C, Collier = 220°C) dans l'extrudeuse, recouvre ainsi l'élément filaire, par le biais de la tête de gainage, à une vitesse de défilement de l'élément filaire égale typiquement à plusieurs dizaines de m/min, pour un débit de pompe d'extrusion typiquement de plusieurs dizaines de cm3/min. En sortie de ce gainage, l'élément filaire est immergé dans un bac de refroidissement rempli d'eau froide, pour solidifier et figer le polyamide dans son état amorphe, puis séché par exemple par passage de la bobine de réception à l'étuve.

### III. Tests et résultats

### Description du test d'adhésion :

La qualité de la liaison entre le caoutchouc et les renforts composites précédemment fabriqués est ensuite appréciée par un test, dans lequel on mesure la force nécessaire pour extraire les renforts d'une composition de caoutchouc vulcanisée, dit encore vulcanisat. Cette composition de caoutchouc est une composition conventionnelle utilisée pour le calandrage de nappes métalliques de ceinture de pneumatique, à base de caoutchouc naturel, de noir de carbone et des additifs usuels.

### Composition de caoutchouc utilisée :

La composition de caoutchouc comprend 100 pce de caoutchouc naturel, 70 pce de noir de carbone série 300, 1,5 pce de N-1, 3-diméthylbutyl-N-phényl-para-phénylènediamine, 1 pce d'un sel de cobalt, 0,9 pce d'acide stéarique, 6 pce de soufre insoluble moléculaire, 0,8 pce de N-tertiarybutyl-2-benzothiazole sulfamide et 7,5 pce de ZnO.

Le vulcanisat est un bloc de caoutchouc constitué de deux plaques de dimensions 200 mm par 4,5 mm et d'épaisseur 3,5 mm, appliquées l'une sur l'autre avant cuisson (l'épaisseur du bloc résultant est alors de 7 mm). C'est lors de la confection de ce bloc que les renforts composites (15 brins au total) sont emprisonnés entre les deux plaques de caoutchouc à l'état cru, à égale distance et en laissant dépasser de part et d'autre de ces plaques une extrémité d'élément composite de longueur suffisante pour la traction ultérieure. Le bloc comportant les renforts est alors placé dans un moule adapté puis cuit sous pression. La cuisson du bloc est réalisée à 160°C pendant 15 min, sous une pression de 16 bars.

A l'issue de la cuisson, l'éprouvette ainsi constituée du bloc vulcanisé et des 15 renforts est mise en place dans les mâchoires d'une machine de traction adaptée pour permettre de tractionner chaque renfort isolément hors du caoutchouc, à une vitesse et une température données : à 50 mm/min et 20°C.

On caractérise les niveaux d'adhésion en mesurant la force dite d'arrachage (notée Fmax) pour arracher les renforts de l'éprouvette (moyenne sur 15 tractions).
1/Traction à 23°C

**Tableau 2**

| | Fmoy (N/mm²) | Fmax (N/mm²) |
|---|---|---|
| Ref 1 | 14,2 | 15,6 |
| A | 18,9 | 20,2 |
| B | 20,0 | 23,3 |

2/Traction à 100°C

**Tableau 3**

| | Fmoy (N/mm²) | Fmax (N/mm²) |
|---|---|---|
| Ref 1 | 5,8 | 6,6 |

3/Traction à 120°C

**Tableau 4**

| | Fmoy (N/mm²) | Fmax (N/mm²) |
|---|---|---|
| A | 7,5 | 8,2 |
| B | 7,6 | 8,4 |

### IV. Conclusion

Ces résultats montrent que l'élément composite incorporant le copolymère à bloc utile selon l'invention permet d'obtenir une adhésion, que ce soit à température ambiante ou à température plus élevée, améliorée par rapport à l'élément composite incorporant un copolymère à blocs ne présentant la viscosité spécifique revendiquée

## Revendications

1. Elément composite comportant un ou plusieurs éléments filaires, le ou lesdits éléments filaires étant recouverts individuellement ou collectivement d'une gaine comprenant une composition de gainage, ladite composition de gainage comprenant un ou plusieurs copolymères thermoplastiques à blocs comprenant :
- au moins un bloc polyamide,
- au moins un bloc polyoléfine,
- au moins un bloc alkylène, et
présentant une viscosité à l'état fondu allant de 300 à 20 000 Pa.s, en particulier de 300 à 15 000 Pa.s mesurée à 230°C par rhéologie oscillatoire.

2. Elément composite selon la revendication 1, **caractérisé en ce que** le ou les blocs polyamide sont aliphatiques.

3. Elément composite selon la revendication 1 ou 2, **caractérisé en ce que** le ou les blocs polyamide présentent chacun une masse moléculaire en nombre mesurée par potentiométrie comprise entre 4000 et 20 000 g/mol.

4. Elément composite selon l'une quelconque des revendications précédentes, **caractérisé en ce que** le ou les blocs polyamide comprennent au moins un motif choisi parmi PA 6, PA 11, PA12, PA 6.10, PA 6.6, PA 6.12, PA 10.10, PA 10.12.

5. Elément composite selon l'une quelconque des revendications précédentes, **caractérisé en ce que** le ou les blocs polyoléfine présentent chacun une viscosité inférieure à 60 000 cps, de préférence inférieure à 40 000 cps, et de préférence inférieure à 20 000 cps, et de façon encore préférentielle entre 1 000 et 20 000 cps, la viscosité étant mesurée à 25°C avec un appareil de Brookfield et selon la méthode Brookfield.

6. Elément composite selon l'une quelconque des revendications précédentes, **caractérisée en ce que** le ou les blocs polyoléfine sont du polybutadiène.

7. Elément composite selon l'une quelconque des revendications précédentes, **caractérisé en ce que** le ou les blocs alkylène sont des dimères d'acide gras, de préférence des diacides en C₈-C₃₆.

8. Elément composite selon l'une quelconque des revendications précédentes, **caractérisé en ce que** le copolymère à blocs est de formule suivante :
PA-(R-Pol-R-PA)n-R-Pol-R-PA
Avec n compris entre 0 et 100, en particulier de 0 à 10, de préférence 0 ou 1,
PA désignant le bloc polyamide,
R désignant le bloc alkylène,
Pol désignant le bloc polyoléfine.

9. Elément composite selon l'une quelconque des revendications précédentes, **caractérisé en ce que**
- la teneur en bloc polyamide est comprise entre 2 et 98% en poids par rapport au poids total du copolymère à blocs,
- la teneur en bloc polyoléfine est comprise entre 2 et 98% en poids par rapport au poids total du copolymère à blocs, et
- la teneur en bloc alkylène est comprise entre 0,1 et 25%, de préférence entre 1 et 15% en poids par rapport au poids total du copolymère à blocs,
la somme étant égale à 100%.

10. Elément composite selon l'une quelconque des revendications précédentes, **caractérisé en ce que** le copolymère à blocs comprend au moins un bloc allongeur de chaîne.

11. Elément composite selon la revendication précédente, **caractérisé en ce que** le copolymère à blocs est de formule suivante :
X-(copo blocs)-(Ya-A'-Ya)-[(copo blocs)-(Ya-A'-Ya)]m-(copo blocs)-X
Dans laquelle
- (copo blocs) désigne le copolymère à blocs tel que défini à l'une quelconque des revendications 1 à 9,
- (Ya-A'-Ya) désigne un allongeur de chaine Y1-A'-Y1 pour lequel
les fonctions réactives Y1 ont réagi avec les extrémités du copolymère à blocs conduisant à des fonctions Ya,
A' désigne un biradical hydrocarboné de structure non polymérique,
- m est un entier entre 0 et 100,
- X désigne la fonction libre du copolymère à blocs.

12. Elément composite selon la revendication 10 ou 11, **caractérisé en ce que** l'allongeur de chaîne est le dianhydride 3,3',4,4'-benzophénone tétracarboxylique.

## Patentansprüche

1. Verbundelement, das ein oder mehrere fadenartige Elemente aufweist, wobei das oder die fadenartigen Elemente einzeln oder in ihrer Gesamtheit von einer Hülle bedeckt sind, welche eine Umhüllungszusammensetzung umfasst, wobei die Umhüllungszusammensetzung ein oder mehrere thermoplastische Blockcopolymere umfasst, welche Folgendes umfassen:
- mindestens einen Polyamidblock,
- mindestens einen Polyolefinblock,
- mindestens einen Alkylenblock, und
wobei sie im geschmolzenen Zustand eine Viskosität im Bereich von 300 bis 20.000 Pa.s, insbesondere von 300 bis 15.000 Pa.s aufweisen, wenn die Messung bei 230 °C mittels Schwingungsrheometrie erfolgt.

2. Verbundelement nach Anspruch 1, **dadurch gekennzeichnet, dass** der oder die Polyamidblöcke aliphatisch sind.

3. Verbundelement nach Anspruch 1 oder 2, **dadurch gekennzeichnet, dass** der oder die Polyamidblöcke jeweils ein zahlenbasiertes Molekulargewicht im Bereich von 4.000 bis 20.000 g/mol aufweisen, wenn die Messung mittels Potentiometrie erfolgt.

4. Verbundelement nach einem beliebigen der vorhergehenden Ansprüche, **dadurch gekennzeichnet, dass** der oder die Polyamidblöcke mindestens einen Baustein umfassen, der aus PA 6, PA 11, PA12, PA 6.10, PA 6.6, PA 6.12, PA 10.10, PA 10.12 ausgewählt ist.

5. Verbundelement nach einem beliebigen der vorhergehenden Ansprüche, **dadurch gekennzeichnet, dass** der oder die Polyolefinblöcke jeweils eine Viskosität von weniger als 60.000 cps, vorzugsweise von weniger als 40.000 cps, und vorzugsweise von weniger als 20.000 cps, sowie wiederum bevorzugt zwischen 1.000 und 20.000 cps aufweisen, wobei die Viskosität bei 25 °C mit einem Brookfield-Gerät und gemäß der Brookfield-Methode gemessen wird.

6. Verbundelement nach einem beliebigen der vorhergehenden Ansprüche, **dadurch gekennzeichnet, dass** es sich bei dem oder den Polyolefinblöcken um Polybutadien handelt.

7. Verbundelement nach einem beliebigen der vorhergehenden Ansprüche, **dadurch gekennzeichnet, dass** es sich bei dem oder den Alkylenblöcken um Fettsäuredimere, vorzugsweise um C₈―C₃₆―Disäuren handelt.

8. Verbundelement nach einem beliebigen der vorhergehenden Ansprüche, **dadurch gekennzeichnet, dass** das Blockcopolymer der folgenden Formel entspricht:
PA-(R-Pol-R-PA)n-R-Pol-R-PA
wobei n im Bereich von 0 bis 100, insbesondere von 0 bis 10 liegt, vorzugsweise gleich 0 oder 1 ist,
wobei PA den Polyamidblock bezeichnet,
wobei R den Alkylenblock bezeichnet,
wobei Pol den Polyolefinblock bezeichnet.

9. Verbundelement nach einem beliebigen der vorhergehenden Ansprüche, **dadurch gekennzeichnet, dass**
- der Polyamidblockgehalt im Bereich von 2 bis 98 Gewichts-% liegt, bezogen auf das Gesamtgewicht des Blockcopolymers,
- der Polyolefinblockgehalt im Bereich von 2 bis 98 Gewichts-% liegt, bezogen auf das Gesamtgewicht des Blockcopolymers, und
- der Polyalkylenblockgehalt im Bereich von 0,1 bis 25 %, vorzugsweise von 1 bis 15 % nach Gewicht liegt, bezogen auf das Gesamtgewicht des Blockcopolymers, wobei die Summe gleich 100 % ist.

10. Verbundelement nach einem beliebigen der vorhergehenden Ansprüche, **dadurch gekennzeichnet, dass** das Blockcopolymer mindestens einen kettenverlängernden Block umfasst.

11. Verbundelement nach dem vorhergehenden Anspruch, **dadurch gekennzeichnet, dass** das Blockcopolymer der folgenden Formel entspricht:
X-(Blockcopo)-(Ya-A'-Ya)-[(Blockcopo)-(Ya-A'-Ya)]m-(Blockcopo)-X
wobei
- (Blockcopo) das Blockcopolymer gemäß der Begriffsbestimmung in einem beliebigen der Ansprüche 1 bis 9 bezeichnet,
- (Ya-A'-Ya) einen Kettenverlängerer Y1-A'-Y1 bezeichnet, bei welchem
die reaktionsfähigen funktionellen Gruppen Y1 mit den Ende den Blockcopolymers reagiert haben, wodurch funktionelle Gruppen Ya entstanden sind,
A' ein Kohlenwasserstoff-Diradikal mit einer nichtpolymerartigen Struktur bezeichnet,
- m für eine ganze Zahl im Bereich von 0 bis 100 steht,
- X die freie funktionelle Gruppe des Blockcopolymers bezeichnet.

12. Verbundelement nach Anspruch 10 bis 11, **dadurch gekennzeichnet, dass** es sich bei dem Kettenverlängerer um 3,3',4,4'-Benzophenontetracarbonsäure-Dianhydrid handelt.

## Claims

1. Composite element comprising one or more threadlike elements, the said threadlike element or threadlike elements being covered individually or collectively with a sheath comprising a sheathing composition, the said sheathing composition comprising one or more thermoplastic block copolymers comprising:
- at least one polyamide block,
- at least one polyolefin block,
- at least one alkylene block, and
exhibiting a melt viscosity ranging from 300 to 20 000 Pa.s, in particular from 300 to 15 000 Pa.s, measured at 230°C by oscillatory rheology.

2. Composite element according to Claim 1, **characterized in that** the polyamide block or blocks are aliphatic.

3. Composite element according to Claim 1 or 2, **characterized in that** the polyamide block or blocks each exhibit a number-average molecular weight, measured by potentiometry, of between 4000 and 20 000 g/mol.

4. Composite element according to any one of the preceding claims, **characterized in that** the polyamide block or blocks comprise at least one unit chosen from PA 6, PA 11, PA 12, PA 6.10, PA 6.6, PA 6.12, PA 10.10 and PA 10.12.

5. Composite element according to any one of the preceding claims, **characterized in that** the polyolefin block or blocks each exhibit a viscosity of less than 60 000 cPs, preferably of less than 40 000 cPs and preferably of less than 20 000 cPs, and more preferably between 1000 and 20 000 cPs, the viscosity being measured at 25°C with a Brookfield device and according to the Brookfield method.

6. Composite element according to any one of the preceding claims, **characterized in that** the polyolefin block or blocks are polybutadiene.

7. Composite element according to any one of the preceding claims, **characterized in that** the alkylene block or blocks are fatty acid dimers, preferably C₈-C₃₆ diacids.

8. Composite element according to any one of the preceding claims, **characterized in that** the block copolymer has the following formula:
PA-(R-Pol-R-PA)ₙ-R-Pol-R-PA
with n between 0 and 100, in particular from 0 to 10, preferably 0 or 1,
PA denoting the polyamide block,
R denoting the alkylene block,
Pol denoting the polyolefin block.

9. Composite element according to any one of the preceding claims, **characterized in that**:
- the content of polyamide block is between 2% and 98% by weight, with respect to the total weight of the block copolymer,
- the content of polyolefin block is between 2% and 98% by weight, with respect to the total weight of the block copolymer, and
- the content of alkylene block is between 0.1% and 25%, preferably between 1% and 15%, by weight, with respect to the total weight of the block copolymer, the sum being equal to 100%.

10. Composite element according to any one of the preceding claims, **characterized in that** the block copolymer comprises at least one chain-extending block.

11. Composite element according to the preceding claim, **characterized in that** the block copolymer has the following formula:
X-(block copo)-(Ya-A'-Ya)-[(block copo)-(Ya-A'-Ya)]ₘ-(block copo)-X
in which:
- (block copo) denotes the block copolymer as defined in any one of Claims 1 to 9,
- (Ya-A'-Ya) denotes a chain extender Y1-A'-Y1 for which:
the reactive functional groups Y1 have reacted with the ends of the block copolymer, resulting in Ya functional groups,
A' denotes a hydrocarbon biradical of non-polymeric structure,
- m is an integer between 0 and 100,
- X denotes the free functional group of the block copolymer.

12. Composite element according to Claim 10 or 11, **characterized in that** the chain extender is 3,3',4,4'-benzophenonetetracarboxylic dianhydride.
